# EUROPEAN PATENT SPECIFICATION

(11) **EP 4 105 262 B1**
(45) Date of publication and mention of the grant of the patent: **02.04.2025**
(21) Application number: 21754530.0
(22) Date of filing: 10.02.2021
(51) Int. Cl.: C08G 77/48, C08L 23/26, C08L 33/06, C08L 71/00

(54) **CURABLE COMPOSITION AND CURED PRODUCT THEREOF**
HÄRTBARE ZUSAMMENSETZUNG UND GEHÄRTETES PRODUKT DARAUS
COMPOSITION DURCISSABLE ET PRODUIT DURCI ASSOCIÉ

(30) Priority: 13.02.2020 JP 2020022499
(43) Date of publication of application: 21.12.2022
(73) Proprietor: Kaneka Corporation, Osaka-shi, Osaka 530-8288 (JP)
(72) Inventor: ZHANG, Dong, Takasago-shi, Hyogo 676-8688 (JP)
(74) Representative: Vossius & Partner Patentanwälte Rechtsanwälte mbB
(86) International application number: PCT/JP2021/005026
(87) International publication number: WO 2021/162048

(56) References cited:
- WO-A1-2008/053875
- WO-A1-2008/053875
- WO-A1-2016/114376
- WO-A1-2016/114376
- WO-A1-2018/105704
- WO-A1-2018/105704
- WO-A1-2019/189491
- WO-A1-2019/189491
- JP-A- 2014 114 434
- JP-A- 2014 114 434

## Description

### Technical Field

The present invention relates to a curable composition containing an organic polymer having a reactive silicon group and a cured product of the composition.

### Background Art

Reactive silicon group-containing organic polymers are known as moisture-reactive polymers. These polymers are contained in many industrial products such as adhesives, sealing materials, coating materials, paints, and pressure-sensitive adhesives, and are used in diverse fields. Known examples of the reactive silicon group-containing organic polymers include various polymers having a polyoxyalkylene polymer backbone, a saturated hydrocarbon polymer backbone, or a (meth)acrylic ester polymer backbone.

In general, a curable composition containing such a reactive silicon group-containing organic polymer further contains a curing catalyst (also referred to as "silanol condensation catalyst") for accelerating the curing reaction of the polymer.

Widely used curing catalysts are carbon-tin bond-containing organotin catalysts such as dibutyltin bis(acetylacetonate). However, organotin compounds have recently been pointed out as being toxic, and there is a demand for development of non-organotin catalysts.

In the context of non-organotin catalysts, techniques using amine compounds such as 1,8-diazabicyclo[5,4,0]undec-7-ene (DBU) have been reported (see Patent Literatures 1 to 3, for example).

However, an amine compound such as DBU offers low catalytic activity when used alone. Patent Literatures 1 and 2 disclose that high curability is achieved by using an amine compound in combination with a Lewis acid such as boron trifluoride.

Patent Literature 3 discloses that a reactive silicon group-containing organic polymer capable of rapid curing is prepared by introducing a particular substituent on the silicon atom of the reactive silicon group and that an amine compound is used as a curing catalyst for the polymer.

### Citation List

### Patent Literature

PTL 1: Japanese Laid-Open Patent Application Publication No. 2006-199730
PTL 2: WO 2008/099858
PTL 3: Japanese Laid-Open Patent Application Publication No. 2013-213229

WO2016/114376A1 discloses a curable composition comprising a polymer having a reactive silicon group, an acidic compound and an amine compound.

### Summary of Invention

### Technical Problem

As taught in Patent Literature 3, adding an amine compound to a reactive silicon group-containing organic polymer capable of rapid curing can result in high curability without the use of any Lewis acid.

However, studies by the present inventors have revealed that when a cured product of a reactive silicon group-containing organic polymer is produced using an amine compound such as DBU as a curing catalyst, bleed-out occurs in which liquid matter emerges on the surface of the cured product over time after the curing.

In view of the above circumstances, the present invention aims to provide a curable composition that contains a reactive silicon group-containing organic polymer and an amine compound and that can exhibit high curability and at the same time avoid bleed-out after curing.

### Solution to Problem

As a result of intensive studies aimed at solving the problem described above, the present inventors have found that when an acid anhydride and/or a particular carboxylic acid is added to a non-organotin curable composition containing an organic polymer having a particular reactive silicon group-containing structure and a particular amine compound, high curability can be achieved and at the same time bleed-out after curing can be prevented. Based on this finding, the inventors have arrived at the present invention.

Specifically, the present invention relates to a non-organotin curable composition containing:
(A) an organic polymer having a reactive silicon group-containing structure;
(B) an amidine compound having a melting point lower than 23°C; and
(C) an acid anhydride and/or a carboxylic acid having a pKa of 3 to 5, wherein

the reactive silicon group-containing structure of the organic polymer (A) is represented by at least one of the following formulae (1) to (6): 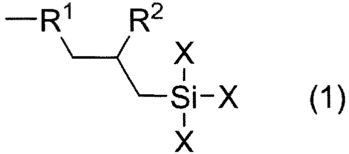
wherein R¹ represents a divalent linkage group optionally containing a heteroatom, R² represents a hydrogen atom or a hydrocarbon group having 1 to 5 carbon atoms, and X represents a hydroxy group or a hydrolyzable group; 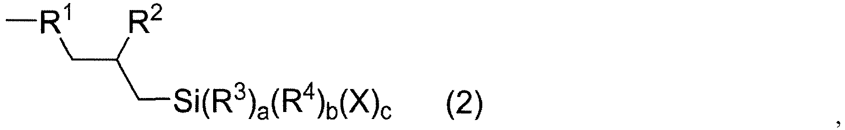
wherein R¹, R², and X are as defined above, R³ represents a hydrocarbon group having 1 to 5 carbon atoms and bearing an electron-withdrawing group on the carbon atom at the 1-position, R⁴ represents an unsubstituted hydrocarbon group having 1 to 5 carbon atoms, a is 1 or 2, b is 0 or 1, c is 1 or 2, and the relation a + b + c = 3 is satisfied; 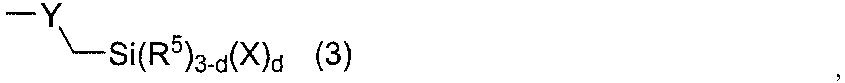
wherein R⁵ represents a hydrocarbon group having 1 to 20 carbon atoms and optionally containing a heteroatom, X is as defined above, Y represents a divalent group selected from the group consisting of -O-, -S-, -N(R⁶)-, -O-C(=O)-N(R⁶)-, -N(R⁶)-C(=O)-O-, and -N(R⁶)-C(=O)-N(R⁶)-, R⁶ represents a hydrogen atom or a hydrocarbon group having 1 to 20 carbon atoms and optionally containing a heteroatom, and d is 1, 2, or 3; and 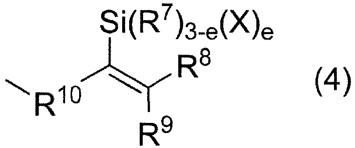 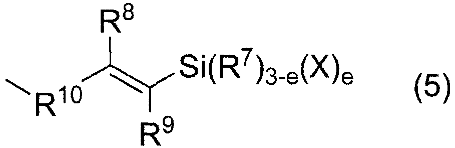 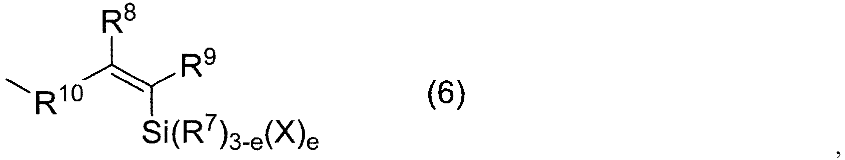
wherein R⁷ represents a hydrocarbon group having 1 to 20 carbon atoms and optionally containing a heteroatom, X is as defined above, e is 1, 2, or 3, R⁸ and R⁹ each independently represent a hydrogen atom, an alkyl group having 1 to 20 carbon atoms, an aryl group having 6 to 20 carbon atoms, an aralkyl group having 7 to 20 carbon atoms, or a silyl group, R¹⁰ represents a divalent linkage group, and each of the two bonds from R¹⁰ is a bond of a carbon atom, an oxygen atom, a nitrogen atom, or a sulfur atom contained in the linkage group.

Preferably, the formulae (4) to (6) are expressed as the following formulae (7) to (9), respectively: 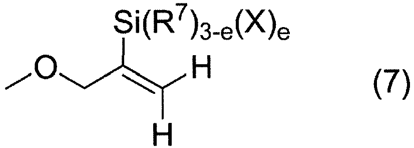 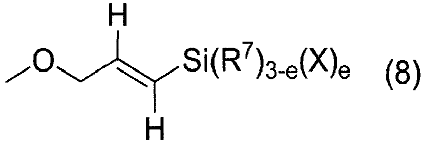 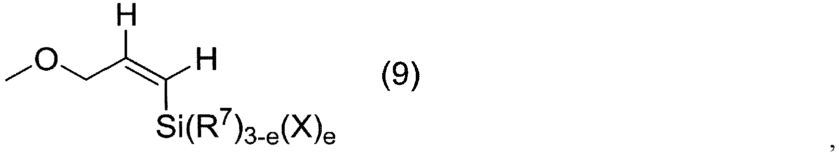 wherein R⁷, X, and e are as defined for the groups in the formulae (4) to (6).

Preferably, a polymer backbone of the organic polymer (A) is at least one selected from the group consisting of a polyoxyalkylene polymer, a saturated hydrocarbon polymer, and a (meth)acrylic ester polymer.

Preferably, the amidine compound (B) is represented by the following formula (10):

R¹¹N=CR¹²-NR¹³₂ (10),

wherein R¹¹, R¹², and two R¹³ each independently represent a hydrogen atom or an organic group, and two or more of R¹¹, R¹², and two R¹³ are optionally bonded to form a cyclic structure.

Preferably, the content of the amidine compound (B) is from 0.1 to 15 parts by weight and the content of the acid anhydride and/or carboxylic acid (C) is from 0.1 to 15 parts by weight per 100 parts by weight of the organic polymer (A).

Preferably, the component (C) includes an acid anhydride.

The present invention also relates to a cured product obtained by curing the non-organotin curable composition as defined above.

The present invention further relates to a method of preventing bleed-out on a surface of a cured product, the method including mixing an organic polymer (A), an amidine compound (B), and an acid anhydride and/or carboxylic acid (C) and curing the resulting mixture to obtain the cured product, wherein the organic polymer (A) has a reactive silicon group-containing structure represented by at least one of the formulae (1) to (6) as defined above, the amidine compound (B) has a melting point lower than 23°C, and the carboxylic acid (C) has a pKa of 3 to 5.

### Advantageous Effects of Invention

The present invention can provide a curable composition that contains a reactive silicon group-containing organic polymer and an amine compound and that can exhibit high curability and at the same time avoid bleed-out after curing. By virtue of the use of the reactive silicon group-containing organic polymer capable of rapid curing, the curable composition according to the present invention can exhibit high curability without having to contain any Lewis acid.

### Description of Embodiments

Hereinafter, embodiments of the present invention will be described specifically.

A curable composition according to the present disclosure contains, as a curable resin, an organic polymer (A) having a reactive silicon group (this polymer may hereinafter be referred to as "reactive silicon group-containing organic polymer (A)" or simply as "polymer (A)") and further contains an amidine compound (B) and an acid anhydride and/or carboxylic acid (C).

### <<Reactive Silicon Group-Containing Organic Polymer (A)>>

The reactive silicon group-containing organic polymer (A) has a polymer backbone composed of a plurality of repeating units and a terminal structure bonded to an end of the polymer backbone. The "polymer backbone" refers to a polymer main chain composed of a plurality of repeating units. The polymer backbone of the polymer (A) may be linear or branched. A linear polymer backbone is preferred in order to achieve a high degree of elongation of a cured product of the curable composition, and a branched polymer backbone is preferred in order to achieve a high strength of the cured product of the curable composition. In the case where the polymer backbone of the polymer (A) is a polyoxyalkylene polymer, the linear polymer backbone can be formed by using an initiator having one or two hydroxy groups in the molecule in a polymerization method for polymer backbone formation, while the branched polymer backbone can be formed by using an initiator having three or more hydroxy groups in the molecule.

The polymer backbone is preferably a polymer backbone consisting only of a plurality of repeating units linked to one another or a polymer backbone containing structures derived from the initiator used in polymerization in addition to the plurality of repeating units and consisting only of the plurality of repeating units and the initiator-derived structures. In the case where the polymer backbone of the polymer (A) is a polyoxyalkylene polymer, the "repeating unit" refers to an oxyalkylene unit, which is, for example, an oxyalkylene unit having 2 to 6 carbon atoms and preferably an oxyalkylene unit having 2 to 4 carbon atoms.

The "terminal structure" refers to a moiety that does not contain the repeating unit of the polymer backbone and that is bonded to an end of the polymer backbone. In the case where the polymer backbone of the polymer (A) is a polyoxyalkylene polymer, the terminal structure is preferably bonded via an oxygen atom to the oxyalkylene unit located at an end of the polymer backbone. The reactive silicon groups and below-described reactive silicon group-containing structures of the polymer (A) are preferably contained in the terminal structures. In this case, every terminal structure may contain a reactive silicon group, or there may be both terminal structures that contain reactive silicon groups and terminal structures that do not contain any reactive silicon groups.

The reactive silicon group-containing organic polymer (A) preferably has reactive silicon groups at two or more ends of the polymer backbone. In the case where the polymer backbone of the polymer (A) is linear, the polymer (A) can be said to have reactive silicon groups at both ends of the polymer backbone. The polymer (A) is preferably a polymer component composed of polymer molecules each having reactive silicon groups at two or more ends of the polymer backbone. However, in the whole polymer (A), there may be not only such polymer molecules but also a polymer molecule having a reactive silicon group only at one end of the polymer backbone and/or a polymer molecule having no reactive silicon group.

The number of reactive silicon groups per molecule of the reactive silicon group-containing organic polymer (A) is preferably more than 1, more preferably 1.1 or more, even more preferably 1.3 or more, and particularly preferably 1.5 or more on average. As for the upper limit, the number of reactive silicon groups per molecule is preferably 5 or less and more preferably 4 or less on average.

The average ratio of the number of reactive silicon groups to the number of polymer backbone ends in the molecule of the organic polymer (A) is not limited to a particular range, and may be 1.0 or less or may be more than 1.0. The value of the average ratio can be determined by the method as described in Examples. The value of the average ratio may be determined by a method other than that described in Examples and can be calculated from a result of GPC analysis or NMR analysis of the reactive silicon group-containing organic polymer (A).

In the present specification, the "average ratio of the number of reactive silicon groups to the number of polymer backbone ends" refers to the number of reactive silicon groups contained on average per terminal structure of the polymer backbone, and is expressed as (average number of reactive silicon groups per polymer molecule)/(number of polymer backbone ends per polymer molecule). The number of polymer backbone ends per polymer molecule is two in the case where all of the polymer backbones are linear and three or more in the case where all of the polymer backbones are branched. In the case where the polymer backbones include both linear and branched backbones, the number of polymer backbone ends per polymer molecule can be between 2 and 3.

### <Reactive Silicon Group-Containing Structure>

The organic polymer (A) has a reactive silicon group-containing structure represented by at least one of formulae (1) to (6). The formulae will be described hereinafter.

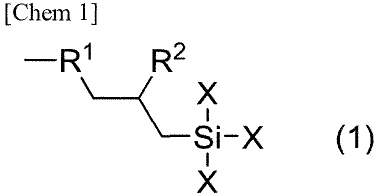

In the formula (1), R¹ represents a divalent linkage group optionally containing a heteroatom, R² represents a hydrogen atom or a hydrocarbon group having 1 to 5 carbon atoms, and X represents a hydroxy group or a hydrolyzable group.

Examples of R¹ include, but are not limited to, -O-, -S-, -N(R⁶)-, -O-C(=O)-N(R⁶)-, -N(R⁶)-C(=O)-O-, and -N(R⁶)-C(=O)-N(R⁶)-. R⁶ will be described later.

R² is preferably a hydrogen atom or an alkyl group having 1 to 4 carbon atoms and more preferably a hydrogen atom or an alkyl group having 1 to 3 carbon atoms. Examples of the alkyl group include methyl, ethyl, propyl, and butyl groups. R² is preferably a hydrogen atom, a methyl group, or an ethyl group and more preferably a hydrogen atom or a methyl group.

Examples of X include a hydroxy group, a hydrogen atom, halogens, and alkoxy, acyloxy, ketoximate, amino, amide, acid amide, aminooxy, mercapto, and alkenyloxy groups. Among these, alkoxy groups are preferred in terms of moderate hydrolyzability and ease of handling. More preferred are methoxy and ethoxy groups, and particularly preferred is a methoxy group.

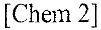

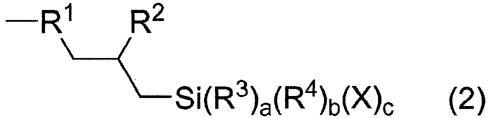

In the formula (2), R¹, R², and X are as defined above, R³ represents a hydrocarbon group having 1 to 5 carbon atoms and bearing an electron-withdrawing group on the carbon atom at the 1-position, R⁴ represents an unsubstituted hydrocarbon group having 1 to 5 carbon atoms, a is 1 or 2, b is 0 or 1, c is 1 or 2, and the relation a + b + c = 3 is satisfied.

The number of carbon atoms in the hydrocarbon group represented by R³ is preferably from 1 to 4, more preferably from 1 to 3, even more preferably 1 or 2, and particularly preferably 1.

The hydrocarbon group represented by R³ bears an electron-withdrawing group on the carbon atom at the 1-position (i.e., the carbon atom adjacent to the silicon atom in the formula (2)). Examples of the electron-withdrawing group include, but are not limited to: halogen atoms; oxygen-containing substituents such as alkoxy and acyloxy groups; nitrogen-containing substituents such as amino, alkylamino, and ureido groups; and other electron-withdrawing groups such as acyl, alkoxycarbonyl, nitro, cyano, isocyanato, sulfonyl, perfluoroalkyl, and electron-withdrawing aryl groups.

More specific examples of the electron-withdrawing group include: halogen atoms such as fluorine, chlorine, bromine, and iodine atoms; alkoxy groups such as methoxy, ethoxy, 1-propoxy, 2-propoxy, 1-butoxy, 2-butoxy, tert-butyloxy, octoxy, lauryloxy, phenoxy, and benzyloxy groups; acyloxy groups such as acetoxy, propanoyloxy, and benzoyloxy groups; an amino group; substituted amino groups such as methylamino, dimethylamino, ethylamino, diethylamino, propylamino, dipropylamino, and diphenylamino groups; urethane bond- or urea bond-containing groups such as ureido and carbamate groups; acyl groups such as acetyl, propanoyl, octanoyl, lauroyl, and benzoyl groups; alkoxycarbonyl groups such as methoxycarbonyl and tert-butyloxycarbonyl groups; nitro, cyano, and isocyanato groups; sulfonyl groups such as methylsulfonyl and toluenesulfonyl groups; perfluoroalkyl groups such as trifluoromethyl, pentafluoroethyl, perfluoropropyl groups, perfluorohexyl groups, and perfluorooctyl groups; and electron-withdrawing aryl groups such as difluorophenyl and pentafluorophenyl groups.

For the polymer (A) to exhibit high curability, the electron-withdrawing group is preferably a halogen atom, an alkoxy group, a substituted or unsubstituted amino group, or a trifluoromethyl group and more preferably a halogen atom, an alkoxy group, or a substituted or unsubstituted amino group.

Specific examples of R³ include, but are not limited to, fluoromethyl, difluoromethyl, trifluoromethyl, chloromethyl, dichloromethyl, bromomethyl, iodomethyl, methoxymethyl, ethoxymethyl, phenoxymethyl, aminomethyl, N-methylaminomethyl, N,N-dimethylaminomethyl, N-ethylaminomethyl, N,N-diethylaminomethyl, acetoxymethyl, and methylcarbamate groups.

R⁴ represents a hydrocarbon group having no substituent, and the number of carbon atoms in the hydrocarbon group is from 1 to 5, preferably from 1 to 4, more preferably from 1 to 3, even more preferably 1 or 2, and particularly preferably 1.

Examples of the hydrocarbon group represented by R⁴ which has 1 to 5 carbon atoms include, but are not limited to: alkyl groups such as methyl, ethyl, n-propyl, isopropyl, n-butyl, isobutyl, sec-butyl, tert-butyl, and n-pentyl groups; alkenyl groups such as vinyl, 2-propenyl, 3-butenyl, and 4-pentenyl groups; and cycloalkyl groups such as cyclopropyl, cyclobutyl, and cyclopentyl groups. Among these, alkyl groups are preferred. More preferred are methyl and ethyl groups, and particularly preferred is a methyl group.

In the formula (2), a is 1 or 2, b is 0 or 1, and c is 1 or 2 (it should be noted that the sum of a, b, and c is 3). For the organic polymer (A) to have high curability, it is preferable that a be 1, b be 0, and c be 2.

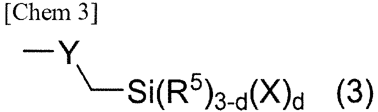

In the formula (3), R⁵ represents a hydrocarbon group having 1 to 20 carbon atoms and optionally containing a heteroatom, X is as defined above, Y represents a divalent group selected from the group consisting of -O-, -S-, -N(R⁶)-, -O-C(=O)-N(R⁶)-, -N(R⁶)-C(=O)-O-, and -N(R⁶)-C(=O)-N(R⁶)-, R⁶ represents a hydrogen atom or a hydrocarbon group having 1 to 20 carbon atoms and optionally containing a heteroatom, and d is 1, 2, or 3.

R⁵ is a hydrocarbon group having 1 to 20 carbon atoms. The number of carbon atom in the hydrocarbon group represented by R⁵ is preferably from 1 to 12, more preferably from 1 to 6, and particularly preferably from 1 to 4. The hydrocarbon group may be an unsubstituted hydrocarbon group or a hydrocarbon group having a substituent.

A hetero-containing group that the hydrocarbon group represented by R⁵ may contain as the substituent is a group containing a heteroatom. The heteroatom is defined herein as any atom other than carbon and hydrogen atoms.

Suitable examples of the heteroatom include N, O, S, P, Si, and halogen atoms. The total number of the carbon atoms and heteroatoms in the hetero-containing group is preferably from 1 to 10, more preferably from 1 to 6, and even more preferably from 1 to 4.

Suitable examples of the hetero-containing group include: a hydroxy group; a mercapto group; halogen atoms such as Cl, Br, I, and F; a nitro group; a cyano group; alkoxy groups such as methoxy, ethoxy, n-propyloxy, and isopropyloxy groups; alkylthio groups such as methylthio, ethylthio, n-propylthio, and isopropylthio groups; acyl groups such as acetyl, propionyl, and butanoyl groups; acyloxy groups such as acetyloxy, propionyloxy, and butanoyloxy groups; substituted or unsubstituted amino groups such as amino, methylamino, ethylamino, dimethylamino, and diethylamino groups; substituted or unsubstituted aminocarbonyl groups such as aminocarbonyl, methylaminocarbonyl, ethylaminocarbonyl, dimethylaminocarbonyl, and diethylaminocarbonyl groups; and a cyano group.

In the case where R⁵ is a hydrocarbon group substituted with a hetero-containing group, the total number of carbon atoms and heteroatoms in R⁵ is preferably from 2 to 30, more preferably from 2 to 18, more preferably from 2 to 10, and particularly preferably from 2 to 6.

Specific examples of the hydrocarbon group represented by R⁵ include: alkyl groups such as methyl, ethyl, n-propyl, isopropyl, n-butyl, isobutyl, sec-butyl, tert-butyl, n-pentyl, n-hexyl, n-heptyl, n-octyl, 2-ethyl-n-hexyl, n-nonyl, n-decyl, n-undecyl, n-dodecyl, n-tridecyl, n-tetradecyl, n-pentadecyl, n-hexadecyl, n-octadecyl, n-nonadecyl, and n-icosyl groups; alkenyl groups such as vinyl, 2-propenyl, 3-butenyl, and 4-pentenyl groups; cycloalkyl groups such as cyclopropyl, cyclobutyl, cyclopentyl, cyclohexyl, cycloheptyl, and cyclooctyl groups; aryl groups such as phenyl, naphthalen-1-yl, naphthalen-2-yl, o-phenylphenyl, m-phenylphenyl, and p-phenylphenyl groups; and aralkyl groups such as benzyl, phenethyl, naphthalen-1-ylmethyl, and naphthalen-2-ylmethyl groups.

Any of these hydrocarbon groups substituted with the hetero-containing group described above is also preferred as R⁵.

Suitable examples of R⁵ include alkyl groups such as methyl and ethyl groups; alkyl groups having a hetero-containing group, such as chloromethyl and methoxymethyl groups; cycloalkyl groups such as a cyclohexyl group; aryl groups such as a phenyl group; and aralkyl groups such as a benzyl group. R⁵ is preferably a methyl, methoxymethyl, or chloromethyl group, more preferably a methyl or methoxymethyl group, and even more preferably a methyl group.

Y represents a divalent group selected from the group consisting of -O-, -S-, -N(R⁶)-, -O-C(=O)-N(R⁶)-, -N(R⁶)-C(=O)-O-, and -N(R⁶)-C(=O)-N(R⁶)-. Y is preferably -S- or -O-C(=O)-N(R⁶)- and more preferably -O-C(=O)-N(R⁶)-.

R⁶ represents a hydrogen atom or a hydrocarbon group having 1 to 20 carbon atoms and optionally containing a heteroatom. Examples of the hydrocarbon group include those mentioned above for R⁵, and specific examples include: alkyl groups such as methyl, ethyl, n-propyl, and isopropyl groups; alkyl groups having a hetero-containing group, such as chloromethyl and methoxymethyl groups; cycloalkyl groups such as a cyclohexyl group; aryl groups such as phenyl and naphthyl groups; and aralkyl groups such as a benzyl group. R⁶ is preferably a hydrogen atom or a hydrocarbon group having 1 to 12 carbon atoms, more preferably a hydrogen atom or a hydrocarbon group having 1 to 6 carbon atoms, and even more preferably a hydrogen atom or a hydrocarbon group having 1 to 3 carbon atoms. Two R⁶ in -N(R⁶)-C(=O)-N(R⁶)- are the same or different.

In the formula (3), d is 1, 2, or 3. In terms of curability, d is preferably 2 or 3.

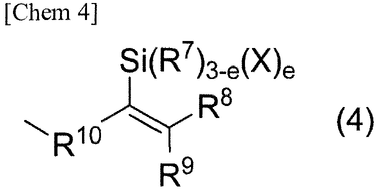

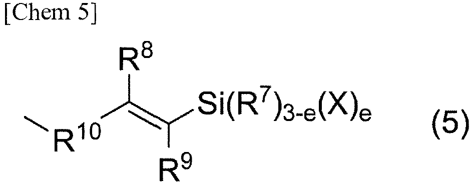

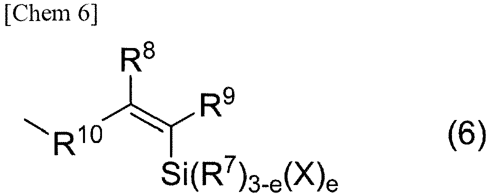

In the formulae (4) to (6), R⁷ represents a hydrocarbon group having 1 to 20 carbon atoms and optionally containing a heteroatom, X is as defined above, e is 1, 2, or 3, R⁸ and R⁹ each independently represent a hydrogen atom, an alkyl group having 1 to 20 carbon atoms, an aryl group having 6 to 20 carbon atoms, an aralkyl group having 7 to 20 carbon atoms, or a silyl group, R¹⁰ represents a divalent linkage group, and each of the two bonds from R¹⁰ is a bond of a carbon atom, an oxygen atom, a nitrogen atom, or a sulfur atom contained in the linkage group.

R⁷ is the same as R⁵ described above, and the above description about R⁵ applies to R⁷.

R⁸ and R⁹ are each independently a hydrogen atom, an alkyl group having 1 to 20 carbon atoms, an aryl group having 6 to 20 carbon atoms, an aralkyl group having 7 to 20 carbon atoms, or a silyl group. The number of carbon atoms in the alkyl group is preferably from 1 to 12, more preferably from 1 to 6, and particularly preferably from 1 to 4. The number of carbon atoms in the aryl group is preferably from 6 to 12 and more preferably from 6 to 10. The number of carbon atoms in the aralkyl group is preferably from 7 to 12.

Specific examples of R⁸ and R⁹ include: a hydrogen atom; alkyl groups such as methyl, ethyl, and cyclohexyl groups; aryl groups such as phenyl and tolyl groups; aralkyl groups such as benzyl and phenethyl groups; and silyl groups such as a trimethylsilyl group. Among these, a hydrogen atom, a methyl group, and a trimethylsilyl group are preferred. More preferred are a hydrogen atom and a methyl group, and even more preferred is a hydrogen atom.

R¹⁰ is a divalent linkage group. Each of the two bonds from R¹⁰ is a bond of a carbon atom, an oxygen atom, a nitrogen atom, or a sulfur atom contained in the linkage group.

The statement "each of the two bonds from R¹⁰ is a bond of a carbon atom, an oxygen atom, a nitrogen atom, or a sulfur atom contained in the linkage group" means that each of the two bonds from R¹⁰ is present on the carbon, oxygen, nitrogen, or sulfur atom contained in the linkage group.

Specific examples of the divalent linkage group include -(CH₂)ₙ-, -O-(CH₂)ₙ-, -S-(CH₂)ₙ-, -N(R⁶)-(CH₂)ₙ-, -O-C(=O)-N(R⁶)-(CH₂)ₙ-, and -N(R⁶)-C(=O)-N(R⁶)-(CH₂)ₙ-. Among these, -O-(CH₂)ₙ-, -O-C(=O)-N(R⁶)-(CH₂)ₙ-, and -N(R⁶)-C(=O)-N(R⁶)-(CH₂)ₙ- are preferred. In terms of raw material availability, -O-CH₂- is more preferred. R⁶ is as defined above. The integer n is preferably from 0 to 10, more preferably from 0 to 5, even more preferably from 0 to 2, particularly preferably 0 or 1, and most preferably 1.

In the formulae (4) to (6), e is 1, 2, or 3. In terms of curability, e is preferably 2 or 3.

Preferably, the formulae (4) to (6) are expressed as the following formulae (7) to (9), respectively.

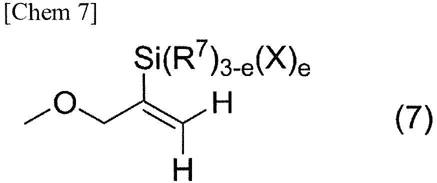

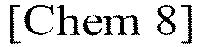

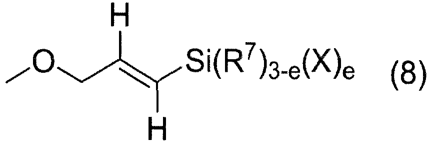

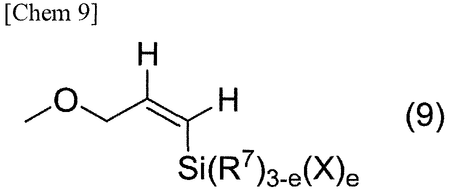

In the formulae (7) to (9), R⁷, X, and e are as defined for the groups in the formulae (4) to (6).

Specific examples of the reactive silicon groups in the structures represented by the formulae (1) to (6) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups.

### <Main Chain Structure>

The main chain structure of the reactive silicon group-containing organic polymer (A) may be linear or have a branched chain.

The reactive silicon group-containing organic polymer (A) is not limited to having a particular polymer backbone. Any of various polymers with different polymer backbones can be used as the reactive silicon group-containing organic polymer (A). Examples of the polymer backbone of the reactive silicon group-containing organic polymer (A) include organic polymers, including: polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; saturated hydrocarbon polymers such as ethylene-propylene copolymer, polyisobutylene, copolymer of isobutylene with isoprene, polychloroprene, polyisoprene, copolymer of isoprene or butadiene with acrylonitrile and/or styrene, polybutadiene, copolymer of isoprene or butadiene with acrylonitrile and styrene, and hydrogenated polyolefin polymers resulting from hydrogenation of these polyolefin polymers; polyester polymers; vinyl polymers such as (meth)acrylic ester polymers resulting from radical polymerization of (meth)acrylic ester monomers such as ethyl (meth)acrylate and butyl(meth)acrylate, and polymers resulting from radical polymerization of monomers such as (meth)acrylic monomers, vinyl acetate, acrylonitrile, and styrene; graft polymers resulting from polymerization of vinyl monomers mentioned in the above polymers; polysulfide polymers; polyamide polymers; polycarbonate polymers; and diallyl phthalate polymers. Each of the polymers mentioned above may be present as a mixture of different forms of polymers such as block and graft polymers. Among the above polymers, the saturated hydrocarbon polymers, polyoxyalkylene polymers, and (meth)acrylic ester polymers are preferred in that they have a relatively low glass transition temperature and that the resulting cured product has high cold resistance. More preferred are the polyoxyalkylene polymers, and particularly preferred is polyoxypropylene.

The reactive silicon group-containing organic polymer (A) may be a polymer having any one of the various polymer backbones mentioned above or a mixture of polymers having different ones of the above various polymer backbones. The mixture may be a mixture of polymers produced separately from each other or a mixture of polymers produced together so as to achieve given mix proportions.

The number-average molecular weight of the reactive silicon group-containing organic polymer (A) is not limited to a particular range, and the number-average molecular weight as determined by GPC as a polystyrene equivalent molecular weight is preferably from 3,000 to 100,000, more preferably from 3,000 to 50,000, and particularly preferably from 3,000 to 30,000. When the number-average molecular weight is within the above range, the amount of the introduced reactive silicon groups is appropriate so that the reactive silicon group-containing organic polymer (A) having a manageable viscosity and high workability is likely to be obtained while the production cost is controlled within a moderate range.

The molecular weight of the reactive silicon group-containing organic polymer (A) can be expressed also as a terminal group equivalent molecular weight. The terminal group equivalent molecular weight is determined as follows: before introduction of reactive silicon groups, a polymer precursor is subjected to titration analysis based on the principles of the hydroxy value measurement method as specified in JIS K 1557 and the iodine value measurement method as specified in JIS K 0070 to directly measure the terminal group concentration, based on which the terminal group equivalent molecular weight is calculated taking into account the polymer architecture (in particular, the degree of branching which depends on the polymerization initiator used). The terminal group equivalent molecular weight of the reactive silicon group-containing organic polymer (A) can be determined also by creating a calibration curve representing the relationship between the number-average molecular weight of the polymer precursor as determined by common GPC analysis and the terminal group equivalent molecular weight, determining the number-average molecular weight of the reactive silicon group-containing organic polymer (A) by GPC, and converting the determined number-average molecular weight to the terminal group equivalent molecular weight based on the calibration curve.

The reactive silicon group-containing organic polymer (A) is not limited to having a particular molecular weight distribution (Mw/Mn), but preferably has a narrow molecular weight distribution. To be specific, Mw/Mn is preferably less than 2.0, more preferably 1.6 or less, even more preferably 1.5 or less, and particularly preferably 1.4 or less. The molecular weight distribution of the reactive silicon group-containing organic polymer (A) can be determined from the number-average molecular weight and weight-average molecular weight obtained by GPC analysis.

### <Methods of Producing Reactive Silicon Group-Containing Organic Polymer (A)>

Hereinafter, methods of producing the reactive silicon group-containing organic polymer (A) will be described. The reactive silicon group-containing organic polymer (A) can be produced by introducing reactive silicon groups into a precursor polymer that permits introduction of the reactive silicon groups.

The following describes in detail various aspects of the method of producing the reactive silicon group-containing organic polymer (A) whose main chain is a polyoxyalkylene polymer. The method of producing the reactive silicon group-containing organic polymer (A) is not limited to those described below.

In a first aspect of the method of producing the reactive silicon group-containing organic polymer (A), the organic polymer (A) whose main chain is a polyoxyalkylene polymer and which has a reactive silicon group-containing structure represented by the formula (1) or (2) or any of the formulae (4) to (6) can be obtained by: introducing unsaturated carbon-carbon bonds into a polyoxyalkylene polymer (D) having terminal hydroxy groups by means of reactivity of the hydroxy groups to obtain an unsaturated carbon-carbon bond-containing precursor polymer; and then reacting the precursor polymer with a reactive silicon group-containing compound reactive with the unsaturated carbon-carbon bonds to introduce reactive silicon groups into the polymer.

### (Polymerization)

The polymer backbone of the polyoxyalkylene polymer can be formed by polymerizing an epoxy compound with a hydroxy group-containing initiator using a conventionally known method, and thus the polyoxyalkylene polymer (D) having terminal hydroxy groups can be obtained. The polymerization method is not limited to a particular technique. Polymerization using a double metal cyanide complex catalyst such as zinc hexacyanocobaltate-glyme complex is preferred because this polymerization can yield a hydroxy-terminated polymer having a narrow molecular weight distribution (small value of Mw/Mn).

Examples of the hydroxy group-containing initiator include, but are not limited to, ethylene glycol, propylene glycol, glycerin, pentaerythritol, low-molecular-weight polyoxypropylene glycol, low-molecular-weight polyoxypropylene triol, butanol, allyl alcohol, low-molecular-weight polyoxypropylene monoallyl ether, and low-molecular-weight polyoxypropylene monoalkyl ether.

Examples of the epoxy compound include, but are not limited to, alkylene oxides such as ethylene oxide and propylene oxide and glycidyl ethers such as methyl glycidyl ether and butyl glycidyl ether. Propylene oxide is preferred.

### (Reaction with Alkali Metal Salt)

When introducing unsaturated carbon-carbon bonds into the polyoxyalkylene polymer (D) having terminal hydroxy groups, it is preferable to first react an alkali metal salt with the polyoxyalkylene polymer (D) to convert the terminal hydroxy groups to metaloxy groups. A double metal cyanide complex catalyst can be used instead of the alkali metal salt. The above reaction results in formation of a metaloxy-terminated polyoxyalkylene polymer (E).

Examples of the alkali metal salt include, but are not limited to, sodium hydroxide, sodium alkoxides, potassium hydroxide, potassium alkoxides, lithium hydroxide, lithium alkoxides, cesium hydroxide, and cesium alkoxides. In terms of ease of handling and solubility, sodium hydroxide, sodium methoxide, sodium ethoxide, sodium tert-butoxide, potassium hydroxide, potassium methoxide, potassium ethoxide, and potassium tert-butoxide are preferred, and sodium methoxide and sodium tert-butoxide are more preferred. Sodium methoxide is preferred in terms of availability. A solution of the alkali metal salt in a solvent may be used in the reaction.

### (Reaction with Electrophile (F))

An unsaturated carbon-carbon bond-containing electrophile (F) is reacted with the metaloxy-terminated polyoxyalkylene polymer (E) obtained as above, and thus the metaloxy groups can be converted to unsaturated carbon-carbon bond-containing structures. This results in formation of a polyoxyalkylene polymer (G) having unsaturated carbon-carbon bonds in terminal structures.

The unsaturated carbon-carbon bond-containing electrophile (F) is not limited to a particular compound, and may be any compound capable of reacting with the metaloxy groups of the polyoxyalkylene polymer (E) to introduce unsaturated carbon-carbon bonds into the polyoxyalkylene polymer. Examples of the electrophile (F) include an unsaturated carbon-carbon bond-containing organic halide (F1) and an unsaturated carbon-carbon bond-containing epoxy compound (F2).

The unsaturated carbon-carbon bond-containing organic halide (F1), which is an example of the electrophile (F), can undergo a substitution reaction of the halogen with the metaloxy groups to form ether bonds and introduce terminal structures containing unsaturated carbon-carbon bonds into the polyoxyalkylene polymer.

The unsaturated carbon-carbon bond-containing organic halide (F1) is preferably a carbon-carbon double bond-containing halogenated hydrocarbon compound. The polyoxyalkylene polymer (G) resulting from a reaction with this halogenated hydrocarbon compound has carbon-carbon double bonds at the ends of the polymer backbone. Introduction of reactive silicon groups into the polymer (G) can result in formation of reactive silicon group-containing structures represented by the formula (1) or (2). In this case, R¹ in the formula (1) or (2) is an oxygen atom.

Examples of the carbon-carbon double bond-containing halogenated hydrocarbon compound include, but are not limited to, allyl chloride, methallyl chloride, allyl bromide, methallyl bromide, allyl iodide, and methallyl iodide. In terms of ease of handling, allyl chloride and methallyl chloride are preferred. Methallyl chloride, methallyl bromide, and methallyl iodide are preferred in order to increase the average ratio of the number of reactive silicon groups to the number of polymer backbone ends.

The unsaturated carbon-carbon bond-containing organic halide (F1) may be a carbon-carbon triple bond-containing halogenated hydrocarbon compound. The polyoxyalkylene polymer (G) resulting from a reaction with this halogenated hydrocarbon compound has carbon-carbon triple bonds at the ends of the polymer backbone. Introduction of reactive silicon groups into the polymer (G) can allow atoms adjacent to the reactive silicon groups to have carbon-carbon double bonds, thus resulting in formation of reactive silicon group-containing structures represented by any of the formulae (4) to (6).

Examples of the carbon-carbon triple bond-containing halogenated hydrocarbon compound include, but are not limited to, propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Among these, propargyl chloride, propargyl bromide, and propargyl iodide are more preferred. The carbon-carbon double bond-containing halogenated hydrocarbon compound described above may be used together with the carbon-carbon triple bond-containing halogenated hydrocarbon compound.

The unsaturated carbon-carbon bond-containing epoxy compound (F2), which is another example of the electrophile (F), can undergo a ring-opening addition reaction of the epoxy groups with the metaloxy groups to form ether bonds and introduce terminal structures containing unsaturated carbon-carbon bonds and hydroxy groups into the polyoxyalkylene polymer. In the ring-opening addition reaction, one molecule of the epoxy compound (F2) or two or more molecules of the epoxy compound (F2) can be added per metaloxy group by adjusting the amount of the epoxy compound (F2) relative to the metaloxy groups and the reaction conditions.

The unsaturated carbon-carbon bond-containing epoxy compound (F2) is not limited to a particular compound, but preferably a carbon-carbon double bond-containing epoxy compound. For example, allyl glycidyl ether, methallyl glycidyl ether, glycidyl acrylate, glycidyl methacrylate, and butadiene monoxide are more preferred in terms of reaction activity, and allyl glycidyl ether is particularly preferred.

Once the unsaturated carbon-carbon bond-containing epoxy compound (F2) is reacted with the metaloxy-terminated polyoxyalkylene polymer (E) as described above, ring opening of the epoxy groups occurs, leading to further formation of metaloxy groups. Thus, the epoxy compound (F2) may first be reacted with the polymer (E), and subsequently the carbon-carbon double bond-containing halogenated hydrocarbon compound previously described may be reacted with the polymer. The compounds which may be used in this example as the carbon-carbon double bond-containing halogenated hydrocarbon compound are the same as those previously mentioned. This method is preferred because it can further increase the amounts of the unsaturated carbon-carbon bonds and reactive silicon groups introduced into the polymer.

### (Reactive Silicon Group Introduction)

The polyoxyalkylene polymer (G) having unsaturated carbon-carbon bonds in its terminal structures (precursor polymer), which is obtained as described above, is subjected to a hydrosilylation reaction with a reactive silicon group-containing hydrosilane compound (H). The hydrosilylation reaction can introduce reactive silicon groups into the polymer. As a result, the organic polymer (A) can be produced whose main chain is a polyoxyalkylene polymer and which has a reactive silicon group-containing structure represented by the formula (1) or (2) or any of the formulae (4) to (6). Appropriate selection of the reactive silicon group-containing hydrosilane compound (H) leads to formation of a reactive silicon group-containing structure represented by the formula (1) or (2).

Specific examples of the reactive silicon group-containing hydrosilane compound (H) include: halosilanes such as trichlorosilane, dichloromethylsilane, chlorodimethylsilane, dichlorophenylsilane, (chloromethyl)dichlorosilane, (dichloromethyl)dichlorosilane, bis(chloromethyl)chlorosilane, (methoxymethyl)dichlorosilane, (dimethoxymethyl)dichlorosilane, and bis(methoxymethyl)chlorosilane; alkoxysilanes such as trimethoxysilane, triethoxysilane, dimethoxymethylsilane, diethoxymethylsilane, dimethoxyphenylsilane, ethyldimethoxysilane, methoxydimethylsilane, ethoxydimethylsilane, (chloromethyl)methylmethoxysilane, (chloromethyl)dimethoxysilane, (chloromethyl)diethoxysilane, bis(chloromethyl)methoxysilane, (methoxymethyl)methylmethoxysilane, (methoxymethyl)dimethoxysilane, bis(methoxymethyl)methoxysilane, (methoxymethyl)diethoxysilane, (ethoxymethyl)diethoxysilane, (3,3,3-trifluoropropyl)dimethoxysilane, (N,N-diethylaminomethyl)dimethoxysilane, (N,N-diethylaminomethyl)diethoxysilane, [(chloromethyl)dimethoxysilyloxy]dimethylsilane, [(chloromethyl)diethoxysilyloxy]dimethylsilane, [(methoxymethyl)dimethoxysilyloxy]dimethylsilane, [(methoxymethyl)diethoxysilyloxy]dimethylsilane, [(diethylaminomethyl)dimethoxysilyloxy]dimethylsilane, and [(3,3,3-trifluoropropyl)dimethoxysilyloxy]dimethylsilane; acyloxysilanes such as diacetoxymethylsilane and diacetoxyphenylsilane; ketoximatosilanes such as bis(dimethylketoximato)methylsilane and bis(cyclohexylketoximato)methylsilane; and isopropenyloxysilanes (deacetonated type) such as triisopropenyloxysilane, (chloromethyl)diisopropenyloxysilane, and (methoxymethyl)diisopropenyloxysilane.

The hydrosilylation reaction is preferably conducted in the presence of a hydrosilylation catalyst to accelerate the reaction. Any of known hydrosilylation catalysts can be used as appropriate.

In a second aspect of the method of producing the reactive silicon group-containing organic polymer (A), a compound (I) having a reactive silicon group and an isocyanate group in the molecule is reacted with the polyoxyalkylene polymer (D) having terminal hydroxy groups (precursor polymer) to form urethane bonds and introduce reactive silicon groups into the polymer. In this aspect, the organic polymer (A) having a reactive silicon group-containing structure represented by any of the formulae (1) to (3) can be produced. In this case, R¹ in the formula (1) or (2) or Y in the formula (3) can be -O-C(=O)-N(R⁶)- described above.

The compound (I) having a reactive silicon group and an isocyanate group in the molecule is not limited to a particular compound and may be any compound having in the molecule both a reactive silicon group and an isocyanate group capable of undergoing a urethanization reaction with the hydroxy group of the polyoxyalkylene polymer (D). Specific examples of the compound (I) include (3-isocyanatopropyl)trimethoxysilane, (3-isocyanatopropyl)dimethoxymethylsilane, (3-isocyanatopropyl)triethoxysilane, (3-isocyanatopropyl)diethoxymethylsilane, (isocyanatomethyl)trimethoxysilane, (isocyanatomethyl)triethoxysilane, (isocyanatomethyl)dimethoxymethylsilane, and (isocyanatomethyl)diethoxymethylsilane.

The urethanization reaction can be conducted without the use of any urethanization catalyst. The urethanization reaction may be conducted in the presence of a urethanization catalyst in order to increase the reaction rate and the reaction percentage. Examples of urethanization catalysts which may be used include conventionally known urethanization catalysts such as those listed in Polyurethanes: Chemistry and Technology, Part I, Table 30, Chapter 4, Saunders and Frisch, Interscience Publishers, New York, 1963. Specific examples of the catalysts include, but are not limited to, base catalysts such as organotin compounds, bismuth compounds, and organic amines.

In a third aspect of the method of producing the reactive silicon group-containing organic polymer (A), an excess amount of polyisocyanate compound (J) is reacted with the polyoxyalkylene polymer (D) having terminal hydroxy groups to give a polymer having terminal isocyanate groups (precursor polymer), and a compound (K) having a reactive silicon group and a group (such as an amino group or a hydroxy group) reactive with the isocyanate group is reacted with the precursor polymer. In this aspect, the organic polymer (A) having a reactive silicon group-containing structure represented by any of the formulae (1) to (3) can be produced. In this case, R¹ in the formula (1) or (2) or Y in the formula (3) can be -N(R⁶)-C(=O)-N(R⁶)- or -N(R⁶)-C(=O)-O- described above.

Examples of the polyisocyanate compound (J) include: aromatic polyisocyanates such as toluene(tolylene) diisocyanate, diphenylmethane diisocyanate, and xylylene diisocyanate; and aliphatic polyisocyanates such as isophorone diisocyanate and hexamethylene diisocyanate.

Examples of the compound (K) having a reactive silicon group and a group reactive with the isocyanate group include: amino group-containing silanes such as γ-aminopropyltrimethoxysilane, γ-aminopropyldimethoxymethylsilane, γ-aminopropyltriethoxysilane, N-(β-aminoethyl)-γ-aminopropyltrimethoxysilane, N-(β-aminoethyl)-γ-aminopropyldimethoxymethylsilane, N-(β-aminoethyl)-γ-aminopropyltriethoxysilane, γ-(N-phenyl)aminopropyltrimethoxysilane, γ-(N-phenyl)aminopropyldimethoxymethylsilane, N-ethylaminoisobutyltrimethoxysilane, N-ethylaminoisobutyldimethoxymethylsilane, N-cyclohexylaminomethyltrimethoxysilane, and N-cyclohexylaminomethyldimethoxymethylsilane; hydroxy group-containing silanes such as γ-hydroxypropyltrimethoxysilane and γ-hydroxypropyldimethoxymethylsilane; and mercapto group-containing silanes such as γ-mercaptopropyltrimethoxysilane and γ-mercaptopropyldimethoxymethylsilane.

In a fourth aspect of the method of producing the reactive silicon group-containing organic polymer (A), a compound (L) having a reactive silicon group and a mercaptan group in the molecule is reacted with the polyoxyalkylene polymer (G) having unsaturated carbon-carbon bonds in its terminal structures (precursor polymer) to form sulfide bonds by addition of the mercaptan groups to the unsaturated carbon-carbon bonds and introduce reactive silicon groups into the polymer. In this aspect, the organic polymer (A) having a reactive silicon group-containing structure represented by any of the formulae (1) to (3) can be produced. In this case, R¹ in the formula (1) or (2) or Y in the formula (3) is a sulfur atom.

The compound (L) having a reactive silicon group and a mercaptan group in the molecule is not limited to a particular compound and may be any compound having in the molecule both a reactive silicon group and a mercaptan group capable of undergoing an addition reaction with the unsaturated carbon-carbon bond of the polyoxyalkylene polymer (G). Specific examples of the compound (L) include (3-mercaptopropyl)methyldimethoxysilane, (3-mercaptopropyl)trimethoxysilane, (3-mercaptopropyl)methyldiethoxysilane, (3-mercaptopropyl)triethoxysilane, (mercaptomethyl)methyldimethoxysilane, (mercaptomethyl)trimethoxysilane, (mercaptomethyl)methyldiethoxysilane, and (mercaptomethyl)triethoxysilane.

The addition reaction of the mercaptan groups with the unsaturated carbon-carbon bonds can be conducted without the use of any radical initiator. The addition reaction may be conducted in the presence of a radical initiator in order to increase the reaction rate and the reaction percentage. A conventionally known initiator can be used as the radical initiator. Specific examples of the radical initiator include, but are not limited to, azo initiators and peroxide initiators.

Among known radical initiators, catalysts having low activity for reactive silicon groups are preferred. From this viewpoint, azo initiators are particularly preferred such as 2,2'-azobis(isobutyronitrile) (AIBN), 2,2'-azobis(2-methylbutyronitrile) (V-59), and 2,2'-azobis(1-methylcyclohexanecarbonitrile) (V-40).

### ((Meth)acrylic Ester Polymer)

Examples of the method of producing the reactive silicon group-containing organic polymer (A) whose main chain is a (meth)acrylic ester polymer include: (I) a method in which a compound having a polymerizable unsaturated group and a reactive functional group (examples of this compound include acrylic acid and 2-hydroxyethyl acrylate) is copolymerized with another monomer having a (meth)acrylic structure to give a polymer, then unsaturated carbon-carbon bonds are introduced at the ends of the polymer, and subsequently a hydrosilylation reaction is carried out to add a reactive silicon group-containing hydrosilane compound to the unsaturated carbon-carbon bonds; and (II) a method in which a monomer having a (meth)acrylic structure is polymerized by a living radical polymerization process such as atom-transfer radical polymerization to give a polymer, then unsaturated carbon-carbon bonds are introduced at the ends of the polymer, and subsequently a hydrosilylation reaction is carried out to add a reactive silicon group-containing hydrosilane compound to the unsaturated carbon-carbon bonds.

### (Saturated Hydrocarbon Polymer)

Examples of the method of producing the reactive silicon group-containing organic polymer (A) whose main chain is a saturated hydrocarbon polymer include a method in which an olefin compound having 2 to 6 carbon atoms such as ethylene, propylene, 1-butene, or isobutylene is used as a main monomer and polymerized to give a polymer, then unsaturated carbon-carbon bonds are introduced at the ends of the polymer, and subsequently a hydrosilylation reaction is carried out to add a reactive silicon group-containing hydrosilane compound to the unsaturated carbon-carbon bonds.

### <<Amidine Compound (B)>>

The amidine compound (B) has a melting point lower than 23°C and is thus liquid at 23°C. Adding the amidine compound (B) to the reactive silicon group-containing organic polymer (A) allows the curable composition to exhibit a practically desired level of curability. The amidine compound that is liquid at 23°C generally tends to cause bleed-out over time after curing; however, the combined use with the component (C) described later can prevent bleed-out.

The amidine compound (B) can be represented by the following formula (10).

R¹¹N=CR¹²-NR¹³₂ (10)

In the formula (10), R¹¹, R¹², and two R¹³ each independently represent a hydrogen atom or an organic group, and two or more of R¹¹, R¹², and two R¹³ are optionally bonded to form a cyclic structure.

In order to increase the curability of the reactive silicon group-containing organic polymer (A), R¹¹ is preferably a hydrogen atom or a hydrocarbon group having 1 to 20 carbon atoms and more preferably a hydrocarbon group in which the carbon atom adjacent to the nitrogen atom (the carbon atom at the α-position) has no unsaturated bond. The number of carbon atoms in R¹¹ is preferably from 1 to 10 and more preferably from 1 to 6 in terms of easy availability.

In order to increase the curability of the reactive silicon group-containing organic polymer (A), R¹² is preferably a hydrogen atom or an organic group represented by -NR¹⁴₂, and more preferably an organic group represented by -NR¹⁴₂. Two R¹⁴ each independently represent a hydrogen atom or an organic group having 1 to 20 carbon atoms.

In the case where R¹² is an organic group represented by -NR¹⁴₂, the amidine compound represented by the formula (10) is called a guanidine compound. In terms of easy availability and in terms of high curability-increasing effect on the reactive silicon group-containing organic polymer (A), the guanidine compound is preferably one in which R¹⁴ is a hydrogen atom or a hydrocarbon group having 1 to 20 carbon atoms and more preferably one in which R¹⁴ is a hydrogen atom or a hydrocarbon group having 1 to 10 carbon atoms.

In terms of high bond strength of the resulting cured product, R¹² is preferably an organic group represented by -NR¹⁵-C(=NR¹⁶)-NR¹⁷₂ (wherein R¹⁵, R¹⁶, and two R¹⁷ each independently represent a hydrogen atom or an organic group having 1 to 6 carbon atoms) or -N=C(NR¹⁸₂)-NR¹⁹₂ (wherein two R¹⁸ and two R¹⁹ each independently represent a hydrogen atom or an organic group having 1 to 6 carbon atoms). In this case, the amidine compound represented by the formula (10) is called a biguanide compound.

When R¹² is -NR¹⁵-C(=NR¹⁶)-NR¹⁷₂, the biguanide compound is preferably one in which R¹⁵, R¹⁶, and two R¹⁷ each independently represent a hydrogen atom or a hydrocarbon group having 1 to 6 carbon atoms, in terms of easy availability and in terms of high bond strength of the resulting cured product. In order to further improve the bond strength of the resulting cured product, it is particularly preferable that at least one of R¹¹, two R¹³, R¹⁵, R¹⁶, and two R¹⁷ represent an aryl group.

When R¹² is -N=C(NR¹⁸₂)-NR¹⁹₂, the biguanide compound is preferably one in which R¹¹, two R¹³, R¹⁸, and two R¹⁹ each independently represent a hydrogen atom or a hydrocarbon group having 1 to 6 carbon atoms, in terms of easy availability and in terms of high bond strength of the resulting cured product.

In terms of easy availability and in terms of high curability of the reactive silicon group-containing organic polymer (A), two R¹³ in the formula (10) preferably represent hydrogen atoms or hydrocarbon groups having 1 to 20 carbon atoms and more preferably represent hydrogen atoms or hydrocarbon groups having 1 to 10 carbon atoms.

The number of carbon atoms in the amidine compound (B) is preferably 2 or more, more preferably 6 or more, and particularly preferably 7 or more. If the number of carbon atoms in the amidine compound (B) is less than 2, the compound tends to have an increased volatility, which leads to deterioration of the work environment. The upper limit of the number of carbon atoms in the amidine compound (B) is not limited to a particular value. The number of carbon atoms is preferably 10,000 or less. The molecular weight of the amidine compound (B) is preferably 60 or more, more preferably 120 or more, and particularly preferably 130 or more for the reason as mentioned above. The upper limit of the molecular weight of the amidine compound (B) is not limited to a particular value. In general, the molecular weight is preferably 100,000 or less.

Examples of the amidine compound (B) include, but are not limited to: pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, and 2-hydroxy-4-aminopyrimidine; imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, and 1-methyl-2-iminoimidazolidin-4-one; amidine compounds such as 1,8-diazabicyclo[5.4.0]undec-7-ene (DBU), 1,5-diazabicyclo[4.3.0]non-5-ene (DBN), 2,9-diazabicyclo[4.3.0]nona-1,3,5,7-tetraene, and 6-(dibutylamino)-1,8-diazabicyclo[5,4,0]undec-7-ene (DBA-DBU); guanidine compounds such as guanidine, dicyandiamide, 1-methylguanidine, 1-ethylguanidine, 1-cyclohexylguanidine, 1-phenylguanidine, 1-(o-tolyl)guanidine, 1,1-dimethylguanidine, 1,3-dimethylguanidine, 1,2-diphenylguanidine, 1,1,2-trimethylguanidine, 1,2,3-trimethylguanidine, 1,1,3,3-tetramethylguanidine, 1,1,2,3,3-pentamethylguanidine, 2-ethyl-1,1,3,3-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, and 7-n-octyl-1,5,7-triazabicyclo[4.4.0]dec-5-ene; and biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-n-butyl-N2-ethylbiguanide, 1,1'-ethylenebisbiguanide, 1,5-ethylenebiguanide, 1-[3-(diethylamino)propyl]biguanide, 1-[3-(dibutylamino)propyl]biguanide, and N',N"-dihexyl-3,12-diimino-2,4,11,13-tetraazatetradecanediamidine. Among these, 1,8-diazabicyclo[5.4.0]undec-7-ene (DBU) is preferred in terms of high curability.

The content of the amidine compound (B) in the curable composition is not limited to a particular range, but is preferably from 0.1 to 15 parts by weight per 100 parts by weight of the reactive silicon group-containing organic polymer (A). When the content of the amidine compound (B) is within this range, the curable composition can avoid bleed-out after curing while exhibiting a practically desired level of curing rate. The content of the amidine compound (B) is more preferably from 0.3 to 10 parts by weight and even more preferably from 0.5 to 5 parts by weight.

### <<Acid Anhydride and/or Carboxylic Acid (C)>>

The component (C) is an acid anhydride or a carboxylic acid. A combination of an acid anhydride and a carboxylic acid may be used. The use of the component (C) in combination with the amidine compound (B) allows the curable composition to have high curability and avoid bleed-out after curing. In order to further improve the curability, the component (C) preferably includes an acid anhydride.

The acid anhydride is preferably a carboxylic anhydride. The acid anhydride may be a compound having a cyclic structure or a compound having no cyclic structure. The acid anhydride may be a compound having a carbon-carbon double bond or a compound having no carbon-carbon double bond. Specific examples of the acid anhydride include acetic anhydride, cis-1,2-cyclohexanedicarboxylic anhydride, benzoic anhydride, maleic anhydride, phthalic anhydride, pyromellitic anhydride, 4,4-biphthalic anhydride, 4,4-oxydiphthalic anhydride, tetrahydrophthalic anhydride, methyltetrahydrophthalic anhydride, hexahydrophthalic anhydride, methylhexahydrophthalic anhydride, methyl himic anhydride, nadic anhydride, trimellitic anhydride, trialkyl phthalic anhydride, dodecylsuccinic anhydride, methyl nadic anhydride, and chlorendic anhydride.

The carboxylic acid is preferably a carboxylic acid having a pKa of 3 to 5. When the pKa of the carboxylic acid is within this range, both high curability and prevention of bleed-out after curing can be achieved. If the pKa of the carboxylic acid is less than 3, the curability tends to be insufficient. If the pKa is more than 5, bleed-out cannot be fully prevented. A carboxylic acid with two pKa values is classified as the carboxylic acid having a pKa of 3 to 5 when the lower of the pKa values is in the range of 3 to 5. The lower limit of the pKa of the carboxylic acid is preferably 3.0, more preferably 3.2, and even more preferably 3.4.

Examples of the carboxylic acid having a pKa of 3 to 5 include, but are not limited to: formic acid (pKa = 3.8); fatty acids such as acetic acid (pKa = 4.8), propionic acid (pKa = 4.9), butyric acid (pKa = 4.8), and 2-ethylhexanoic acid (pKa = 4.9); aromatic carboxylic acids such as benzoic acid (pKa = 4.2); and hydroxy acids such as malic acid (pKa1 = 3.4, pKa2 = 5.1).

The content of the acid anhydride and/or carboxylic acid (C) in the curable composition is not limited to a particular range, but is preferably from 0.1 to 15 parts by weight in total per 100 parts by weight of the reactive silicon group-containing organic polymer (A). When the content of the acid anhydride and/or carboxylic acid (C) is within this range, the curable composition can avoid bleed-out after curing while exhibiting a practically desired level of curing rate. The content of the acid anhydride and/or carboxylic acid (C) is more preferably from 0.3 to 10 parts by weight and even more preferably from 0.5 to 5 parts by weight.

The content ratio between the amidine compound (B) and the acid anhydride and/or carboxylic acid (C) is not limited to a particular range either. In order to allow for both high curability and prevention of bleed-out after curing, the ratio of the number of moles of the carboxy groups contained in the component (C) to the number of moles of the amidine compound (B) is preferably from 0.1 to 10, more preferably from 0.5 to 5, and even more preferably from 0.7 to 1.5. When the component (C) is an acid anhydride, the number of moles of the carboxy groups is twice the number of moles of the acid anhydride.

### <<Curable Composition>>

The curable composition contains the reactive silicon group-containing organic polymer (A) capable of rapid curing. Thus, the curable composition can exhibit high curability despite the fact that the amidine compound (B) is used as a curing catalyst instead of any organotin compound. The curable composition has high curability without having to contain any of Lewis acids such as metal halides and boron halides which are disclosed as curability improvers in Patent Literatures 1 and 2. As such, the curable composition may contain no Lewis acid. Since Lewis acids require special management, the curable composition is preferably free of any Lewis acid.

The curable composition may, if desired, contain various additives in addition to the reactive silicon group-containing organic polymer (A), amidine compound (B), and acid anhydride and/or carboxylic acid (C).

Examples of the additives include a silanol condensation catalyst other than the components (B) and (C), a filler, an adhesion promoter, a plasticizer, an anti-sagging agent, an antioxidant, a light stabilizer, an ultraviolet absorber, a property modifier, an epoxy group-containing compound, a photocurable material, an oxygen-curable material, and a resin other than the reactive silicon group-containing organic polymer (A).

Additives other than those mentioned above may be further added, if desired, to the curable composition in order to adjust the physical properties of the curable composition or a cured product of the composition. Examples of the other additives include a tackifying resin, a solvent, a diluent, an epoxy resin, a surface modifier, a foaming agent, a curability modifier, a flame retardant, a silicate, a radical inhibitor, a metal deactivator, an antiozonant, a phosphorus-based peroxide decomposer, a lubricant, a pigment, and a fungicide.

Hereinafter, typical additives will be described individually.

### <Silanol Condensation Catalyst>

A silanol condensation catalyst other than the components (B) and (C) may be used in the curable composition.

Examples of the silanol condensation catalyst other than the components (B) and (C) include an organotin compound, a metal carboxylate, an amine compound other than the component (B), a carboxylic acid other than the component (C), and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), a reaction product of dibutyltin oxide and a silicate compound, a reaction product of dioctyltin oxide and a silicate compound (an example of this reaction product is dioctyltin bis(triethoxysilicate)), and a reaction product of dibutyltin oxide and a phthalic ester.

Specific examples of the metal carboxylate include tin carboxylate, bismuth carboxylate, titanium carboxylate, zirconium carboxylate, and iron carboxylate. The metal carboxylate used may be a salt composed of any of carboxylic acids mentioned below and any of various metals.

Specific examples of the amine compound other than the component (B) include: amines such as octylamine, 2-ethylhexylamine, laurylamine, and stearylamine; amino group-containing silane coupling agents; and ketimine compounds.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Other silanol condensation catalysts that can be used include fluorine anion-containing compounds, photoacid generators, and photobase generators.

Any silanol condensation catalyst other than the components (B) and (C) need not be used. In the case where such a silanol condensation catalyst is used, the amount of the silanol condensation catalyst is preferably from 0.001 to 10 parts by weight, more preferably from 0.001 to 5 parts by weight, even more preferably from 0.001 to 1 parts by weight, and particularly preferably from 0.001 to 0.5 parts by weight per 100 parts by weight of the reactive silicon group-containing organic polymer (A).

Preferably, the curable composition is substantially free of any organotin compound. To be specific, the organotin compound content in the curable composition is preferably from 0 to 0.5 parts by weight, more preferably from 0 to 0.1 parts by weight, and even more preferably from 0 to 0.01 parts by weight per 100 parts by weight of the reactive silicon group-containing organic polymer (A).

The curable composition may contain a Si-F bond-containing compound or may be substantially free of such a compound. Si-F bond-containing compounds are known to be able to act as curing catalysts for reactive silicon group-containing organic polymers. The curable composition according to the present disclosure can exhibit high curability and at the same time avoid bleed-out after curing even when being substantially free of any Si-F bond-containing compound. Examples of the Si-F bond-containing compounds include a low-molecular-weight compound having a fluorosilyl group and an organic polymer having a fluorosilyl group. The statement "the curable composition is substantially free of any Si-F bond-containing compound" means that the Si-F bond-containing compound content is 0 parts by weight or more but less than 0.1 parts by weight and preferably from 0 to 0.01 parts by weight per 100 parts by weight of the reactive silicon group-containing organic polymer (A).

### <Filler>

Various fillers can be added to the curable composition. Examples of the fillers include heavy calcium carbonate, colloidal calcium carbonate, magnesium carbonate, diatomite, clay, talc, kaolin, Sillitin, calcined Sillitin, titanium oxide, fumed silica, precipitated silica, crystalline silica, molten silica, silicic anhydride, hydrated silicic acid, carbon black, ferric oxide, aluminum fines, zinc oxide, activated zinc oxide, PVC powder, PMMA powder, and glass fibers or filaments.

The amount of the filler used is preferably from 1 to 300 parts by weight and particularly preferably from 10 to 250 parts by weight per 100 parts by weight of the reactive silicon group-containing organic polymer (A).

A balloon (hollow filler) such as an organic or inorganic balloon may be added to reduce the weight (or reduce the specific gravity) of a cured product formed using the curable composition. The balloon is a spherical filler whose interior is hollow. Examples of the material of the balloon include: inorganic materials such as glass, Shirasu soil, and silica; and organic materials such as phenol resin, urea resin, polystyrene, and Saran.

The amount of the balloon used is preferably from 0.1 to 100 parts by weight and particularly preferably from 1 to 20 parts by weight per 100 parts by weight of the reactive silicon group-containing organic polymer (A).

### <Adhesion Promoter>

An adhesion promoter can be added to the curable composition. A silane coupling agent or a reaction product of the silane coupling agent can be added as the adhesion promoter. Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. One of the adhesion promoters may be used alone or two or more of the adhesion promoters may be mixed and used. A reaction product of any of the various silane coupling agents can also be used as the adhesion promoter.

The amount of the silane coupling agent used is preferably from 0.1 to 20 parts by weight and particularly preferably from 0.5 to 10 parts by weight per 100 parts by weight of the reactive silicon group-containing organic polymer (A).

### <Plasticizer>

A plasticizer can be added to the curable composition. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as diisononyl 1,2-cyclohexanedicarboxylate; aliphatic polyfunctional carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate. One of the plasticizers may be used alone or two or more of the plasticizers may be used in combination.

A polymeric plasticizer can also be used. Specific examples of the polymeric plasticizer include: vinyl polymers; polyester plasticizers; polyethers such as polyether polyols (e.g., polyethylene glycol and polypropylene glycol having a number-average molecular weight of 500 or more) and derivatives resulting from conversion of the hydroxy groups of the polyether polyols to ester or ether groups; polystyrenes; polybutadiene; polybutene; polyisobutylene; butadiene-acrylonitrile; and polychloroprene.

The amount of the plasticizer used is preferably from 5 to 150 parts by weight, more preferably from 10 to 120 parts by weight, and particularly preferably from 20 to 100 parts by weight per 100 parts by weight of the reactive silicon group-containing organic polymer (A).

### <Anti-Sagging Agent>

An anti-sagging agent may be added, if desired, to the curable composition to prevent sagging and improve workability. The anti-sagging agent is not limited to a particular material. Examples of the anti-sagging agent include polyamide waxes, hydrogenated castor oil derivatives, and metallic soaps such as calcium stearate, aluminum stearate, and barium stearate. One of these anti-sagging agents may be used alone or two or more of the anti-sagging agents may be used in combination.

The amount of the anti-sagging agent used is preferably from 0.1 to 20 parts by weight per 100 parts by weight of the reactive silicon group-containing organic polymer (A).

### <Antioxidant>

An antioxidant (anti-aging agent) can be used in the curable composition. The use of an antioxidant can increase the weathering resistance of the cured product. Examples of the antioxidant include hindered phenol antioxidants, monophenol antioxidants, bisphenol antioxidants, diarylamine antioxidants, and polyphenol antioxidants. Specific examples of the antioxidant are mentioned, for example, in Japanese Laid-Open Patent Application Publication No. H4-283259 and Japanese Laid-Open Patent Application Publication No. H9-194731.

The amount of the antioxidant used is preferably from 0.1 to 10 parts by weight and particularly preferably from 0.2 to 5 parts by weight per 100 parts by weight of the reactive silicon group-containing organic polymer (A).

### <Light Stabilizer>

A light stabilizer can be used in the curable composition. The use of a light stabilizer can prevent photooxidative degradation of the cured product. Examples of the light stabilizer include benzotriazole, hindered amine, and benzoate compounds. A hindered amine compound is particularly preferred as the light stabilizer.

The amount of the light stabilizer used is preferably from 0.1 to 10 parts by weight and particularly preferably from 0.2 to 5 parts by weight per 100 parts by weight of the reactive silicon group-containing organic polymer (A).

### <Ultraviolet Absorber>

An ultraviolet absorber can be used in the curable composition. The use of an ultraviolet absorber can increase the surface weathering resistance of the cured product. Examples of the ultraviolet absorber include benzophenone, benzotriazole, salicylate, substituted tolyl, and metal chelate compounds. A benzotriazole compound is particularly preferred as the ultraviolet absorber. Specific examples of suitable benzotriazole ultraviolet absorbers include those sold under the trade names Tinuvin P, Tinuvin 213, Tinuvin 234, Tinuvin 326, Tinuvin 327, Tinuvin 328, Tinuvin 329, and Tinuvin 571 (all of these are manufactured by BASF).

The amount of the ultraviolet absorber used is preferably from 0.1 to 10 parts by weight and particularly preferably from 0.2 to 5 parts by weight per 100 parts by weight of the reactive silicon group-containing organic polymer (A).

### <Property Modifier>

A property modifier may be added, if desired, to the curable composition for the purpose of modifying the tensile properties of the resulting cured product. The property modifier is not limited to a particular material Examples of the property modifier include: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition or conversely decrease the hardness and increase the elongation at break. One of the above property modifiers may be used alone or two or more of the property modifiers may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and particularly preferably from 0.5 to 5 parts by weight per 100 parts by weight of the reactive silicon group-containing organic polymer (A).

### <Epoxy Group-Containing Compound>

An epoxy group-containing compound can be used in the curable composition. The use of an epoxy group-containing compound can improve the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate.

The amount of the epoxy compound used is preferably from 0.5 to 50 parts by weight per 100 parts by weight of the reactive silicon group-containing organic polymer (A).

### <Photocurable Material>

A photocurable material can be used in the curable composition. The use of a photocurable material can lead to the formation of a coating of the photocurable material on the surface of the cured product, resulting in reduction in stickiness of the cured product or increase in weathering resistance of the cured product. A wide variety of such materials are known, including organic monomers, oligomers, resins, and compositions containing them. Typical examples of photocurable materials which can be used include: an unsaturated acrylic compound which is a monomer or an oligomer having one or more unsaturated acrylic or methacrylic groups or a mixture of the monomer and oligomer; polyvinyl cinnamates; and azide resins.

The amount of the photocurable material used is preferably from 0.1 to 20 parts by weight and more preferably from 0.5 to 10 parts by weight per 100 parts by weight of the reactive silicon group-containing organic polymer (A).

### <Oxygen-Curable Material>

An oxygen-curable material can be used in the curable composition. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product.

Specific examples of the oxygen-curable material include: drying oils exemplified by tung oil and linseed oil; various alkyd resins resulting from modification of the drying oil compounds; drying oil-modified products of resins such as acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these oxygen-curable materials may be used alone or two or more of the oxygen-curable materials may be used in combination.

The amount of the oxygen-curable material used is preferably from 0.1 to 20 parts by weight and more preferably from 0.5 to 10 parts by weight per 100 parts by weight of the reactive silicon group-containing organic polymer (A). As taught in Japanese Laid-Open Patent Application Publication No. H3-160053, it is preferable to use the oxygen-curable material together with a photocurable material.

### <<Preparation of Curable Composition>>

The curable composition can be prepared as a one-part composition all the components of which are blended together and hermetically stored and which, when applied to any object, cures under the action of moisture in the air. The curable composition can be prepared also as a two-part composition consisting of a base material containing the reactive silicon group-containing organic polymer (A) and a curing agent which is prepared separately from the base material by blending components such as the component (B), the component (C), another silanol condensation catalyst, a filler, a plasticizer, and water. In the case of this two-part composition, the base material and the curing agent are mixed before use. In terms of workability, the curable composition is preferably prepared as a one-part composition.

In the case where the curable composition is a one-part composition, all the components are blended together beforehand. Thus, it is preferable that a water-containing component be dried to remove water before use or dehydrated by a manipulation such as pressure reduction during blending or kneading. The storage stability of the composition can be further improved by not only performing the drying/dehydration process but also adding a dehydrating agent, in particular a water-reactive silicon compound such as n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

In the case of using a dehydrating agent, in particular a water-reactive silicon compound such as vinyltrimethoxysilane, the amount of the compound used as the dehydrating agent is preferably from 0.1 to 20 parts by weight and more preferably from 0.5 to 10 parts by weight per 100 parts by weight of the reactive silicon group-containing organic polymer (A).

### <<Method of Producing Cured Product>>

Before curing, the curable composition is formed into a desired shape by a process such as coating, casting, or filling. The curable composition formed into a desired shape by coating, casting, or filling can be cured at normal temperature or under heating.

### <<Applications>>

The curable composition can be used as a pressure-sensitive adhesive, a sealing material for sealing purposes in buildings, ships, automobiles, and roads, a mold making material, an adhesive, a paint, or a spray material. A cured product obtained by curing the curable composition is suitable for use as a waterproofing material, a coating-waterproofing material, a vibration-isolating material, a vibration-damping material, a soundproofing material, or a foam material. Since the cured product has excellent flexibility and bond strength, the curable composition is more preferably used as a sealing material or an adhesive.

### Examples

Hereinafter, the present invention will be described in more detail using examples. The present invention is not limited to the examples given below.

In the examples, the number-average molecular weights are GPC molecular weights measured under the following conditions.
Delivery system: HLC-8220 GPC manufactured by Tosoh Corporation
Column: TSKgel SuperH series manufactured by Tosoh Corporation
Solvent: THF
Molecular weight: Polystyrene equivalent
Measurement temperature: 40°C

In the examples, the terminal group equivalent molecular weights are molecular weights each of which was determined as follows: hydroxy and iodine values were measured, respectively, by the measurement method as specified in JIS K 1557 and the measurement method as specified in JIS K 0070, and the molecular weight was calculated based on the hydroxy and iodine values taking into account the organic polymer architecture (in particular, the degree of branching which depends on the polymerization initiator used).

In the examples, the values of the average number of silyl groups per polymer end or per polymer molecule were calculated by NMR analysis.

### (Synthesis Example 1) A-1

Propylene oxide was polymerized using a mixture of 60% by weight of polyoxypropylene glycol having a number-average molecular weight of about 4,500 and 40% by weight of polyoxypropylene triol having a number-average molecular weight of about 4,500 as an initiator in the presence of a zinc hexacyanocobaltate-glyme complex catalyst. This polymerization yielded polyoxypropylene (P-1) having terminal hydroxy groups and having a number-average molecular weight of 17,300 and a polydispersity index Mw/Mn of 1.28.

Sodium methoxide dissolved in methanol at a concentration of 28% was added to the obtained hydroxy-terminated polyoxypropylene (P-1) in an amount of 1.1 molar equivalents per molar equivalent of the hydroxy groups of the hydroxy-terminated polyoxypropylene (P-1). Methanol was distilled off by evaporation under vacuum, and then 1.2 molar equivalents of propargyl bromide was added per molar equivalent of the hydroxy groups of the polymer (P-1) to convert the terminal hydroxy groups to propargyl groups. Bromide propargyl remaining unreacted was removed by evaporation under reduced pressure. The resulting unpurified propargyl-terminated polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-1) having propargyl groups in terminal moieties was obtained.

To 500 g of the polymer (Q-1) were added 50 µL of a platinum-divinyldisiloxane complex (isopropanol solution with a concentration of 3% by weight calculated as the platinum content) and 8.0 g of trimethoxysilane, and a hydrosilylation reaction was carried out. The reaction was allowed to proceed at 90°C for 2 hours, after which trimethoxysilane remaining unreacted was distilled off under reduced pressure to obtain polyoxypropylene (A-1) having terminal trimethoxysilyl groups and having a number-average molecular weight of 19,900. The polymer (A-1) was found to have 0.6 trimethoxysilyl groups on average per polymer end. The polymer (A-1) is a polymer having a reactive silicon group-containing structure represented by at least one of the formulae (4) to (6) at an end of the polymer backbone.

### (Synthesis Example 2) A-2

Sodium methoxide dissolved in methanol at a concentration of 28% was added to the polymer (P-1) as obtained in Synthesis Example 1 in an amount of 1.2 molar equivalents per molar equivalent of the hydroxy groups of the polymer (P-1). Methanol was distilled off by evaporation under vacuum, and then 1.5 molar equivalents of allyl chloride was added per molar equivalent of the hydroxy groups of the polymer (P-1) to convert the terminal hydroxy groups to allyl groups. Allyl chloride remaining unreacted was removed by evaporation under reduced pressure. The resulting unpurified allyl-terminated polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-2) having allyl groups in terminal moieties was obtained.

To 500 g of the polymer (Q-2) were added 36 ppm of a platinum-divinyldisiloxane complex (isopropanol solution with a concentration of 3% by weight calculated as the platinum content) and 8.7 g of methoxymethyldimethoxysilane, and a hydrosilylation reaction was carried out. The reaction was allowed to proceed at 90°C for 2 hours, after which methoxymethyldimethoxysilane remaining unreacted was distilled off under reduced pressure to obtain polyoxypropylene (A-2) having terminal methoxymethyldimethoxysilyl groups and having a number-average molecular weight of 19,900. The polymer (A-2) was found to have 0.7 methoxymethyldimethoxysilyl groups on average per polymer end. The polymer (A-2) is a polymer having a reactive silicon group-containing structure represented by the formula (2) at an end of the polymer backbone.

### (Synthesis Example 3) A-3

Propylene oxide was polymerized using polyoxypropylene triol having a number-average molecular weight of about 4,500 as an initiator in the presence of a zinc hexacyanocobaltate-glyme complex catalyst. This polymerization yielded polyoxypropylene (P-2) having terminal hydroxy groups and having a number-average molecular weight of 24,600 (terminal group equivalent molecular weight = 17,400) and a polydispersity index Mw/Mn of 1.31.

Sodium methoxide dissolved in methanol at a concentration of 28% was added to the obtained hydroxy-terminated polyoxypropylene (P-2) in an amount of 1.2 molar equivalents per molar equivalent of the hydroxy groups of the hydroxy-terminated polyoxypropylene (P-2). Methanol was distilled off by evaporation under vacuum, and then 1.5 molar equivalents of allyl chloride was added per molar equivalent of the hydroxy groups of the polymer (P-2) to convert the terminal hydroxy groups to allyl groups. Allyl chloride remaining unreacted was removed by evaporation under reduced pressure. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-3) having terminal allyl groups was obtained.

To 500 g of the obtained polymer (Q-3) was added 50 µL of a platinum-divinyldisiloxane complex (isopropanol solution with a concentration of 3% by weight calculated as the platinum content), and then 8.5 g of trimethoxysilane was slowly added under stirring. The reaction was allowed to proceed at 100°C for 2 hours, after which trimethoxysilane remaining unreacted was distilled off under reduced pressure to obtain polyoxypropylene (A-3) having terminal trimethoxysilyl groups and having a number-average molecular weight of 26,200. The polymer (A-3) was found to have 0.7 trimethoxysilyl groups on average per polymer end and 2.1 trimethoxysilyl groups on average per molecule. The polymer (A-3) is a polymer having a reactive silicon group-containing structure represented by the formula (1) at an end of the polymer backbone.

### (Synthesis Example 4) N-1

Sodium methoxide dissolved in methanol at a concentration of 28% was added to the polymer (P-1) as obtained in Synthesis Example 1 in an amount of 1.2 molar equivalents per molar equivalent of the hydroxy groups of the polymer (P-1), Methanol was distilled off by evaporation under vacuum, and then 1.5 molar equivalents of allyl chloride was added per molar equivalent of the hydroxy groups of the polymer (P-1) to convert the terminal hydroxy groups to allyl groups. Allyl chloride remaining unreacted was removed by evaporation under reduced pressure. The resulting unpurified allyl-terminated polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-4) having allyl groups in terminal moieties was obtained.

To 500 g of the polymer (Q-4) were added 50 µL of a platinum-divinyldisiloxane complex (isopropanol solution with a concentration of 3% by weight calculated as the platinum content) and 6.5 g of dimethoxymethylsilane, and a hydrosilylation reaction was carried out. The reaction was allowed to proceed at 90°C for 2 hours, after which dimethoxymethylsilane remaining unreacted was distilled off under reduced pressure to obtain polyoxypropylene (N-1) having terminal dimethoxymethylsilyl groups and having a number-average molecular weight of 19,900. The polymer (N-1) was found to have 0.7 dimethoxymethylsilyl groups on average per polymer end. The polymer (N-1) is a polymer for comparison that has a reactive silicon group-containing structure that is not represented by any of the formulae (1) to (6).

### (Examples 1 to 12 and Comparative Examples 1 to 6)

Base materials were prepared according to the component proportions shown in Table 1. Specifically, each base material was prepared as follows: 50 parts by weight of surface-treated colloidal calcium carbonate (manufactured by Shiraishi Kogyo Kaisha, Ltd., trade name "WHITON SB"), 50 parts by weight of non-surface-treated heavy calcium carbonate (manufactured by Shiraishi Kogyo Kaisha, Ltd., trade name "HAKUENKA CCR"), and 2 parts by weight of an anti-sagging agent (manufactured by Kusumoto Chemicals, Ltd., trade name "DISPARLON 6500") were weighed out relative to 100 parts by weight of a corresponding one of the reactive silicon group-containing organic polymers obtained in Synthesis Examples or a commercially-available reactive silicon group-containing organic polymer and were thoroughly dispersed in the organic polymer using a three-roll paint mill, and the resulting mixture was dehydrated under reduced pressure at 120°C for 2 hours.

To each base material were added a vinyl group-containing silane coupling agent serving as a dehydrating agent (manufactured by Momentive Performance Materials Inc., trade name "A-171"), an amino group-containing silane coupling agent serving as an adhesion promoter (manufactured by Dow Coming Toray Co., Ltd., trade name "A-1110"), an epoxy group-containing silane coupling agent (manufactured by Dow Coming Toray Co., Ltd., trade name "A-187"), and an acid anhydride, and then DBU (1,8-diazabicyclo[5,4,0]undec-7-ene, manufactured by Tokyo Chemical Industry Co., Ltd.), which is an amidine compound having a melting point lower than 23°C, was further added as a curing catalyst. The addition procedure was carried out at a constant temperature of 23°C and a constant humidity of 50%, and the proportions (parts by weight) of the added components were as shown in Table 1. The resulting mixture was kneaded with a spatula for 2 minutes and thoroughly defoamed to remove air bubbles. In this manner, curable compositions were prepared.

### (Commercially-Available Reactive Silicon Group-Containing Organic Polymer)

Polymer (A-4): manufactured by Wacker Chemie AG, trade name "GENIOSIL STP-E10": polyoxyalkylene having terminal methyldimethoxysilylmethyl carbamate groups (urethane bonds), a polymer having a reactive silicon group-containing structure represented by the formula (3) at an end of the polymer backbone
Polymer (A-5): manufactured by Wacker Chemie AG, trade name "GENIOSIL STP-E35": polyoxyalkylene having terminal trimethoxysilylpropyl carbamate groups (urethane bonds), a polymer having a reactive silicon group-containing structure represented by the formula (1) at an end of the polymer backbone

### (Acid Anhydride)

Acetic anhydride, manufactured by Tokyo Chemical Industry Co., Ltd.
cis-1,2-Cyclohexanedicarboxylic anhydride, manufactured by Tokyo Chemical Industry Co., Ltd.
Benzoic anhydride, manufactured by Tokyo Chemical Industry Co., Ltd.
Maleic anhydride, manufactured by Tokyo Chemical Industry Co., Ltd.
Phthalic anhydride, manufactured by Tokyo Chemical Industry Co., Ltd.
Pyromellitic anhydride, manufactured by Tokyo Chemical Industry Co., Ltd.
4,4-Biphthalic anhydride, manufactured by Tokyo Chemical Industry Co., Ltd.
4,4-Oxydiphthalic anhydride, manufactured by Tokyo Chemical Industry Co., Ltd.

### (Skinning Time)

At a constant temperature of 23°C and a constant humidity of 50%, each of the curable compositions obtained as above was applied onto a polyethylene sheet and spread to a thickness of 3 mm to smooth the surface of the composition. The moment at which the surface smoothing was completed was defined as the curing onset time point. The surface of the curable composition was touched with a spatula, and the time taken for the curable composition to become non-sticky to the spatula was determined as the skinning time. In this manner, the curing time was measured. The results are shown in Table 1.

### (Bleed-Out)

Each of the curable compositions obtained as above was applied onto a polyethylene sheet and spread to a thickness of 3 mm to smooth the surface of the composition. In this manner, a cured product was prepared. The cured product was left at a constant temperature of 23°C and a constant humidity of 50% for a number of days as indicated in the corresponding table, and thereafter the surface of the cured product was touched with a finger. In the case where any liquid compound did not adhere to the finger, it was determined that bleed-out "did not occur", while in the case where a liquid compound adhered to the finger, it was determined that bleed-out "occurred". The results are shown in Table 1.

**[Table 1-1]**

| | | | Examples | | | | | | | | |
|---|---|---|---|---|---|---|---|---|---|---|---|
| | | | 1 | 2 | 3 | 4 | 5 | 6 | 7 | i 8 | 9 |
| | Reactive silicon group-containing organic polymer | A-1 | 100 | 100 | 100 | 100 | 100 | 100 | 100 | 100 | |
| | | A-2 | | | | | | | | | 100 |
| | | A-3 | | | | | | | | | |
| | | A-4 | | | | | | | | | |
| | | A-5 | | | | | | | | | |
| Base material | | N-1 | | | | | | | | | |
| | Calcium carbonate | HAKUENKA CCR | 50 | 50 | 50 | 50 | 50 | 50 | 50 | 50 | 50 |
| | | WHITON SB | 50 | 50 | 50 | 50 | 50 | 50 | 50 | 50 | 50 |
| | Anti-sagging agent | DISPARLON 6500 | 2 | 2 | 2 | 2 | 2 | 2 | 2 | 2 | 2 |
| Silane coupling agent | | A-171 | 3 | 3 | 3 | 3 | 3 | 3 | 3 | 3 | 3 |
| | | A-1110 | 2 | 2 | 2 | 2 | 2 | 2 | 2 | 2 | 2 |
| | | A-187 | 1 | 1 | 1 | 1 | 1 | 1 | 1 | 1 | 1 |
| Amidine compound having melting point lower than 23°C | | DBU | 1 | 1 | 1 | 1 | 1 | 1 | 1 | 1 | 2 |
| Acid anhydride | | Acetic anhydride | 0.35 | | | | | | | | |
| | | cis-1,2-Cyclohexanedicarboxylic anhydride | | 0.7 | | | | | | | |
| | | Benzoic anhydride | | | 0.7 | | | | | | |
| | | Maleic anhydride | | | | 0.35 | | | | | |
| | | Phthalic anhydride | | | | | 0.7 | | | | |
| | | Pyromellitic anhydride | | | | | | 1 | | | |
| | | 4,4-Biphthalic anhydride | | | | | | | 1 | | |
| | | 4,4-Oxydiphthalic anhydride | | | | | | | | 0.7 | 1.3 |
| Evaluation results | Skinning time | | 7 min | 11 min | 10 min | 10 min | 10 min | 5 min | 6 min | 5 min | 7 min |
| | Bleed-out | After 1 day | Did not occur | Did not occur | Did not occur | Did not occur | Did not occur | Did not occur | Did not occur | Did not occur | Did not occur |
| | | After 3 days | Did not occur | Did not occur | Did not occur | Did not occur | Did not occur | Did not occur | Did not occur | Did not occur | Did not occur |
| | | After 7 days | Did not occur | Did not occur | Did not occur | Did not occur | Did not occur | Did not occur | Did not occur | Did not occur | Did not occur |

**[Table 1-2]**

| - | | | Examples | | | Comparative Examples | | | | | |
|---|---|---|---|---|---|---|---|---|---|---|---|
| | | | 10 | 11 | 12 | I | 2 | 3 | 4 | 5 | 6 |
| | Reactive silicon group-containing organic polymer | A-1 | | | | 100 | | | | | |
| | | A-2 | | | | | 100 | | | | |
| | | A-3 | 100 | | | | | 100 | | | |
| | | A-4 | | 100 | | | | | 100 | | |
| Base material | | A-5 | | | 100 | | | | | 100 | |
| | | N-1 | | | | | | | | | 100 |
| | Calcium carbonate | HAKUENKA CCR | 50 | 50 | 50 | 50 | 50 | 50 | 50 | 50 | 50 |
| | | WHITON SB | 50 | 50 | 50 | 50 | 50 | 50 | 50 | 50 | 50 |
| | Anti-sagging agent | DISPARLON 6500 | 2 | 2 | 2 | 2 | 2 | 2 | 2 | 2 | 2 |
| Silane coupling agent | | A-171 | 3 | 3 | 3 | 3 | 3 | 3 | 3 | 3 | 3 |
| | | A-1110 | 2 | 2 | 2 | 2 | 2 | 2 | 2 | 2 | 2 |
| | | A-187 | 1 | 1 | 1 | 1 | 1 | 1 | 1 | 1 | 1 |
| Amidine compound having melting point lower than 23°C | | DBU | 3 | 2 | 2 | 1 | 2 | 3 | 2 | 2 | 2 |
| | | Acetic anhydride | | | | | | | | | |
| | | cis-1,2-Cyclohexanedicarboxylic | | | | | | | | | |
| | | anhydride | | | | | | | | | |
| | | Benzoic anhydride | | | | | | | | | |
| Acid anhydride | | Maleic anhydride | | | | | | | | | |
| | | Phthalic anhydride | | | | | | | | | |
| | | Pyromellitic anhydride | | | | | | | | | |
| | | 4,4-BiphthalicAcid anhydride | | | | | | | | | |
| | | 4,4-Oxydiphthalic anhydride | 2.5 | 1.3 | 1.3 | | | | | | |
| Evaluation results | Skinning time | | 17 min | 1 min | 2 min | 5 min | 7 min | 11 min | 1 min | 1 min | Uncured after 48 hr |
| | Bleed-out | After 1 day | Did not occur | Did not occur | Did not occur | Occurred | Occurred | Occurred | Occurred | Occurred | - |
| | | After 3 days | Did not occur | Did not occur | Did not occur | Occurred | Occurred | Occurred | Occurred | Occurred | - |
| | | After 7 days | Did not occur | Did not occur | Did not occur | Occurred | Occurred | Occurred | Occurred | Occurred | - |

Table 1 reveals that in Examples 1 to 12, where the organic polymer (A) having a reactive silicon group-containing structure represented by at least one of the formulae (1) to (6), the amidine compound (B) having a melting point lower than 23°C, and the acid anhydride (C) were used, the curability was good and bleed-out of any liquid compound to the surface of the cured product was not observed. In Comparative Examples 1 to 5, which were the same as Examples except for non-use of any acid anhydride, bleed-out of a liquid compound to the surface of the cured product occurred although the curability was good. In Comparative Example 6, where the organic polymer (N-1) having a reactive silicon group-containing structure that is not represented by any of the formulae (1) to (6) and the amidine compound (B) were used, the curability was insufficient so that the composition did not cure even after a lapse of 48 hours.

### (Examples 13 to 20 and Comparative Examples 7 to 14)

Base materials were prepared according to the component proportions shown in Table 2. Specifically, each base material was prepared as follows: 50 parts by weight of surface-treated colloidal calcium carbonate (manufactured by Shiraishi Kogyo Kaisha, Ltd., trade name "WHITON SB"), 50 parts by weight of non-surface-treated heavy calcium carbonate (manufactured by Shiraishi Kogyo Kaisha, Ltd., trade name "HAKUENKA CCR"), and 2 parts by weight of an anti-sagging agent (manufactured by Kusumoto Chemicals, Ltd., trade name "DISPARLON 6500") were weighed out relative to 100 parts by weight of a corresponding one of the reactive silicon group-containing organic polymers obtained in Synthesis Examples or a commercially-available reactive silicon group-containing organic polymer and were thoroughly dispersed in the organic polymer using a three-roll paint mill, and the resulting mixture was dehydrated under reduced pressure at 120°C for 2 hours.

To each base material were added a vinyl group-containing silane coupling agent serving as a dehydrating agent (manufactured by Momentive Performance Materials Inc., trade name "A-171"), an amino group-containing silane coupling agent serving as an adhesion promoter (manufactured by Dow Coming Toray Co., Ltd., trade name "A-1110"), an epoxy group-containing silane coupling agent (manufactured by Dow Coming Toray Co., Ltd., trade name "A-187"), and a carboxylic acid, and then DBU (1,8-diazabicyclo[5,4,0]undec-7-ene, manufactured by Tokyo Chemical Industry Co., Ltd.), which is an amidine compound having a melting point lower than 23°C, was further added as a curing catalyst. The addition procedure was carried out at a constant temperature of 23°C and a constant humidity of 50%, and the proportions (parts by weight) of the added components were as shown in Table 2. The resulting mixture was kneaded with a spatula for 2 minutes and thoroughly defoamed to remove air bubbles. In this manner, curable compositions were prepared.

Each of the prepared curable compositions was subjected to the skinning time measurement and bleed-out evaluation as described above. The results are shown in Table 2.

### (Carboxylic Acid)

DL-Malic acid (50 wt% methanol solution): pKa1 (in H₂O) = 3.4, pKa2 (in H₂O) = 5.1, manufactured by Tokyo Chemical Industry Co., Ltd.

Acetic acid: pKa (in H₂O) = 4.76, manufactured by Tokyo Chemical Industry Co., Ltd.

Propionic acid: pKa (in H₂O) = 4.88, manufactured by Tokyo Chemical Industry Co., Ltd.

Salicylic acid: pKa (in H₂O) = 2.98, manufactured by Kishida Chemical Co., Ltd.

**[Table 2-1]**

| | | | Examples | | | | | | | |
|---|---|---|---|---|---|---|---|---|---|---|
| | | | 13 | 14 | 15 | 16 | 17 | 18 | 19 | 20 |
| | Reactive silicon group-containing organic polymer | A-1 | 100 | | | | | | | |
| | | A-2 | | 100 | 100 | 100 | 100 | | | |
| | | A-3 | | | | | | 100 | | |
| | | A-4 | | | | | | | 100 | |
| Base material | | A-5 | | | | | | | | 100 |
| | | N-1 | | | | | | | | |
| | Calcium carbonate | HAKUENKA CCR | 50 | 50 | 50 | 50 | 50 | 50 | 50 | 50 |
| | | WHITON SB | 50 | 50 | 50 | 50 | 50 | 50 | 50 | 50 |
| | Anti-sagging agent | DISPARLON 6500 | 2 | 2 | 2 | 2 | 2 | 2 | 2 | 2 |
| Silane coupling agent | | A-171 | 3 | 3 | 3 | 3 | 3 | 3 | 3 | 3 |
| | | A-1110 | 2 | 2 | 2 | 2 | 2 | 2 | 2 | 2 |
| | | A-187 | 1 | 1 | 1 | 1 | 1 | 1 | 1 | 1 |
| Amidine compound having melting point lower than 23°C | | DBU | 1 | 2 | 2 | 2 | 2 | 2 | 2 | 2 |
| Carboxylic acid | | DL-Malic acid (50% solution) | | 1.76 | | | | | | |
| | | Acetic acid | | | 0.79 | | | | | |
| | | Propionic acid | 0.5 | | | 1 | 0.80 | 1 | 1 | 1 |
| | | Salicylic acid | | | | | 0.36 | | | |
| Carboxy group/DBU (molar ratio) | | | 1 | 1 | 1 | 1 | 1 | 1 | 1 | 1 |
| Evaluation results | Skinning time | | 12 min | 14 min | 19 min | 16 min | 16 min | 75 min | 1 min | 7 min |
| | Bleed-out | After 1 day | Did not occur | Did not occur | Did not occur | Did not occur | Did not occur | Did not occur | Did not occur | Did not occur |
| | | After 3 days | Did not occur | Did not occur | Did not occur | Did not occur | Did not occur | Did not occur | Did not occur | Did not occur |
| | | After 7 days | Did not occur | Did not occur | Did not occur | Did not occur | Did not occur | Did not occur | Did not occur | Did not occur |

**[Table 2-2]**

| | | | Comparative Examples | | | | | | | |
|---|---|---|---|---|---|---|---|---|---|---|
| | | | 7 | 8 | 9 | 10 | 11 | 12 | 13 | 14 |
| | Reactive silicon group-containing organic polymer | A-1 | 100 | | | | | | | |
| | | A-2 | | 100 | | | | 100 | | |
| | | A-3 | | | 100 | | | | 100 | |
| | | A-4 | | | | 100 | | | | |
| Base material | | A-5 | | | | | 100 | | | |
| | | N-1 | | | | | | | | 100 |
| | Calcium carbonate | HAKUENKA CCR | 50 | 50 | 50 | 50 | 50 | 50 | 50 | 50 |
| | | WHITON SB | 50 | 50 | 50 | 50 | 50 | 50 | 50 | 50 |
| | Anti-sagging agent | DISPARLON 6500 | 2 | 2 | 2 | 2 | 2 | 2 | 2 | 2 |
| Silane coupling agent | | A-171 | 3 | 3 | 3 | 3 | 3 | 3 | 3 | 3 |
| | | A-1110 | 2 | 2 | 2 | 2 | 2 | 2 | 2 | 2 |
| | | A-187 | 1 | 1 | 1 | 1 | 1 | 1 | 1 | 1 |
| Amidine compound having melting point lower than 23°C | | DBU | 1 | 2 | 2 | 2 | 2 | 2 | 2 | 2 |
| Carboxylic acid | | DL-Malic acid (50% solution) | | | | | | | | |
| | | Acetic acid | | | | | | | | |
| | | Propionic acid | | | | | | | | |
| | | Salicylic acid | | | | | | 1.82 | 1.82 | |
| Carboxy group/DBU (molar ratio) | | | | | | | | 1 | 1 | |
| Evaluation results | Skinning time | | 5 min | 7 min | 20 min | 1 min | 1 min | 69 min | Uncured after 3 hr | Uncured after 48 hr |
| | Bleed-out | After 1 day | Occurred | Occurred | Occurred | Occurred | Occurred | Did not occur | - | - |
| | | After 3 days | Occurred | Occurred | Occurred | Occurred | Occurred | Did not occur | - | - |
| | | After 7 days | Occurred | Occurred | Occurred | Occurred | Occurred | Did not occur | - | - |

Table 2 reveals that in Examples 13 to 20, where the organic polymer (A) having a reactive silicon group-containing structure represented by at least one of the formulae (1) to (6), the amidine compound (B) having a melting point lower than 23°C, and the carboxylic acid (C) having a pKa of 3 to 5 were used, the curability was good and bleed-out of any liquid compound to the surface of the cured product was not observed. In Comparative Examples 7 to 11, which were the same as Examples except for non-use of any carboxylic acid, bleed-out of a liquid compound to the surface of the cured product occurred although the curability was good. In Comparative Example 12, where a carboxylic acid having a pKa of less than 3 was used instead of the carboxylic acid (C) having a pKa of 3 to 5, the curability was significantly lower than in Examples 14 to 17 and Comparative Example 8 where the same polymer (A-2) was used. Likewise, in Comparative Example 13, where a carboxylic acid having a pKa of less than 3 was used instead of the carboxylic acid (C) having a pKa of 3 to 5, the curability was significantly lower than in Example 18 and Comparative Example 9 where the same polymer (A-3) was used, and the composition of Comparative Example 13 did not cure even after a lapse of 3 hours. In Comparative Example 14, where the organic polymer (N-1) having a reactive silicon group-containing structure that is not represented by any of the formulae (1) to (6) and the amidine compound (B) were used, the curability was insufficient so that the composition did not cure even after a lapse of 48 hours.

## Claims

1. A non-organotin curable composition comprising:
(A) an organic polymer having a reactive silicon group-containing structure;
(B) an amidine compound having a melting point lower than 23°C; and
(C) an acid anhydride and/or a carboxylic acid having a pKa of 3 to 5, wherein
the reactive silicon group-containing structure of the organic polymer (A) is represented by at least one of the following formulae (1) to (6): 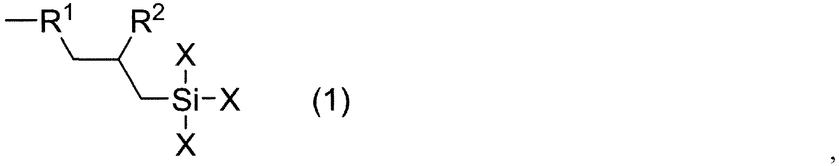
wherein R¹ represents a divalent linkage group optionally containing a heteroatom, R² represents a hydrogen atom or a hydrocarbon group having 1 to 5 carbon atoms, and X represents a hydroxy group or a hydrolyzable group; 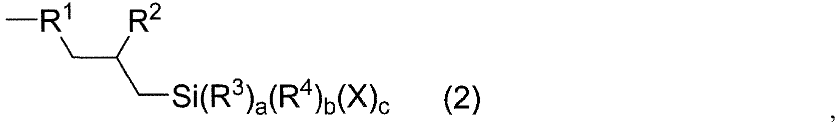
wherein R¹, R², and X are as defined above, R³ represents a hydrocarbon group having 1 to 5 carbon atoms and bearing an electron-withdrawing group on the carbon atom at the 1-position, R⁴ represents an unsubstituted hydrocarbon group having 1 to 5 carbon atoms, a is 1 or 2, b is 0 or 1, c is 1 or 2, and the relation a + b + c = 3 is satisfied; 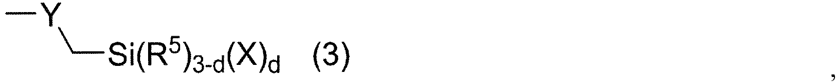
wherein R⁵ represents a hydrocarbon group having 1 to 20 carbon atoms and optionally containing a heteroatom, X is as defined above, Y represents a divalent group selected from the group consisting of -O-, -S-, -N(R⁶)-, -O-C(=O)-N(R⁶)-, -N(R⁶)-C(=O)-O-, and -N(R⁶)-C(=O)-N(R⁶)-, R⁶ represents a hydrogen atom or a hydrocarbon group having 1 to 20 carbon atoms and optionally containing a heteroatom, and d is 1, 2, or 3; and 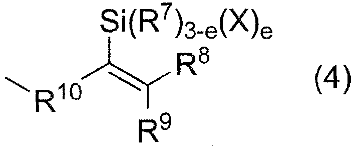 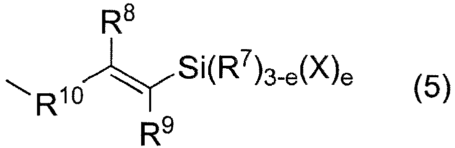 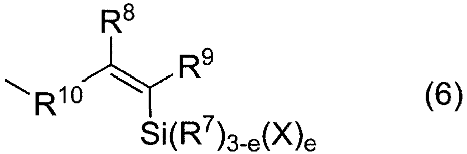 ,
wherein R⁷ represents a hydrocarbon group having 1 to 20 carbon atoms and optionally containing a heteroatom, X is as defined above, e is 1, 2, or 3, R⁸ and R⁹ each independently represent a hydrogen atom, an alkyl group having 1 to 20 carbon atoms, an aryl group having 6 to 20 carbon atoms, an aralkyl group having 7 to 20 carbon atoms, or a silyl group, R¹⁰ represents a divalent linkage group, and each of the two bonds from R¹⁰ is a bond of a carbon atom, an oxygen atom, a nitrogen atom, or a sulfur atom contained in the linkage group.

2. The non-organotin curable composition according to claim 1, wherein the formulae (4) to (6) are expressed as the following formulae (7) to (9), respectively: 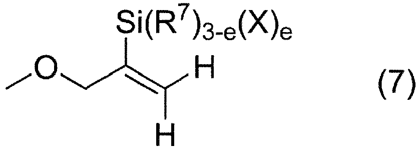 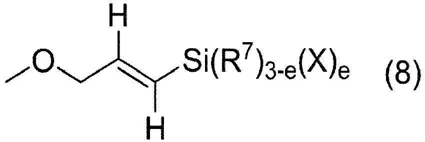 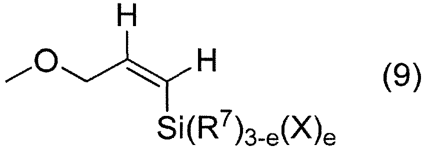 , wherein R⁷, X, and e are as defined for the groups in the formulae (4) to (6).

3. The non-organotin curable composition according to claim 1 or 2, wherein a polymer backbone of the organic polymer (A) is at least one selected from the group consisting of a polyoxyalkylene polymer, a saturated hydrocarbon polymer, and a (meth)acrylic ester polymer.

4. The non-organotin curable composition according to any one of claims 1 to 3, wherein the amidine compound (B) is represented by the following formula (10):
R¹¹N=CR¹²-NR¹³₂ (10),
wherein R¹¹, R¹², and two R¹³ each independently represent a hydrogen atom or an organic group, and two or more of R¹¹, R¹², and two R¹³ are optionally bonded to form a cyclic structure.

5. The non-organotin curable composition according to any one of claims 1 to 4, wherein the content of the amidine compound (B) is from 0.1 to 15 parts by weight and the content of the acid anhydride and/or carboxylic acid (C) is from 0.1 to 15 parts by weight per 100 parts by weight of the organic polymer (A).

6. The non-organotin curable composition according to any one of claims 1 to 5, wherein the component (C) comprises an acid anhydride.

7. A cured product obtained by curing the non-organotin curable composition according to any one of claims 1 to 6.

8. A method of preventing bleed-out on a surface of a cured product, the method comprising mixing an organic polymer (A), an amidine compound (B), and an acid anhydride and/or carboxylic acid (C) and curing the resulting mixture to obtain the cured product, wherein the organic polymer (A) has a reactive silicon group-containing structure represented by at least one of the formulae (1) to (6) as defined in any one of claims 1 to 6, the amidine compound (B) has a melting point lower than 23°C, and the carboxylic acid (C) has a pKa of 3 to 5.

## Patentansprüche

1. Eine nicht-zinnorganische härtbare Zusammensetzung, umfassend:
(A) ein organisches Polymer mit einer reaktiven, Siliziumgruppen enthaltenden Struktur;
(B) eine Amidinverbindung mit einem Schmelzpunkt von weniger als 23°C; und
(C) ein Säureanhydrid und/oder eine Carbonsäure mit einem pKa von 3 bis 5,
wobei die eine reaktive Siliziumgruppe enthaltende Struktur des organischen Polymers (A) durch mindestens eine der nachstehenden Formeln (1) bis (6) dargestellt ist: 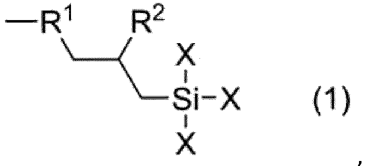
wobei R¹ eine zweiwertige Bindungsgruppe, welche gegebenenfalls ein Heteroatom enthält, darstellt, R² ein Wasserstoffatom oder eine Kohlenwasserstoffgruppe mit 1 bis 5 Kohlenstoffatomen darstellt, und X eine Hydroxygruppe oder eine hydrolisierbare Gruppe darstellt; 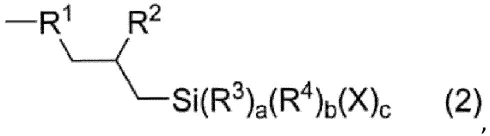
wobei R¹, R² und X wie vorstehend definiert sind, R³ eine Kohlenwasserstoffgruppe, welche 1 bis 5 Kohlenstoffatome aufweist und welche an dem Kohlenstoffatom in 1-Position eine elektronenziehende Gruppe aufweist, darstellt, R⁴ eine unsubstituierte Kohlenwasserstoffgruppe mit 1 bis 5 Kohlenstoffatomen darstellt, a gleich 1 oder 2 ist, b gleich 0 oder 1 ist, c gleich 1 oder 2 ist, und die Beziehung a + b + c = 3 erfüllt ist; 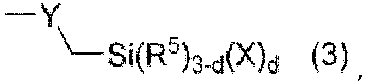
wobei R⁵ eine Kohlenwasserstoffgruppe, welche 1 bis 20 Kohlenstoffatome aufweist und welche gegebenenfalls ein Heteroatom enthält, darstellt, X wie vorstehend definiert ist, Y eine zweiwertige Gruppe, ausgewählt aus der Gruppe bestehend aus -O-, -S-, -N(R⁶)-, -O-C(=O)-N(R⁶)-, -N(R⁶)-C(=O)-O- und -N(R⁶)-C(=O)-N(R⁶)- darstellt, R⁶ ein Wasserstoffatom oder eine Kohlenwasserstoffgruppe, welche 1 bis 20 Kohlenstoffatome aufweist und welche gegebenenfalls ein Heteroatom enthält, darstellt, und d gleich 1, 2 oder 3 ist; und 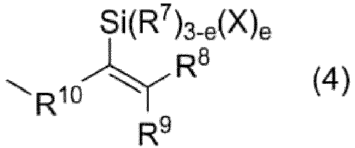 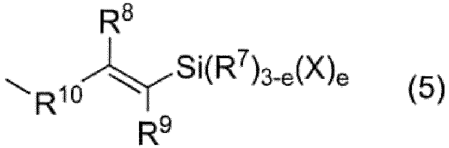 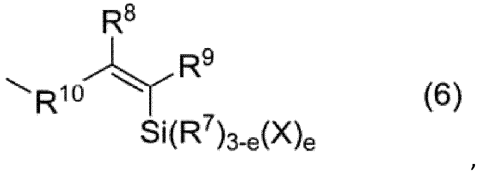
wobei R⁷ eine Kohlenwasserstoffgruppe, welche 1 bis 20 Kohlenstoffatome enthält und welche gegebenenfalls ein Heteroatom enthält, darstellt, X wie vorstehend definiert ist, e gleich 1, 2 oder 3 ist, R⁸ und R⁹ jeweils unabhängig ein Wasserstoffatom, eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Silylgruppe darstellt, R¹⁰ eine zweiwertige Bindungsgruppe darstellt, und jede der beiden Bindungen von R¹⁰ eine Bindung eines Kohlenstoffatoms, eines Sauerstoffatoms, eines Stickstoffatoms oder eines Schwefelatoms, welche in der Bindungsgruppe enthalten sind, ist.

2. Die nicht-zinnorganische härtbare Zusammensetzung gemäß Anspruch 1, wobei die Formeln (4) bis (6) durch die nachstehenden Formeln (7) bis (9) ausgedrückt sind: 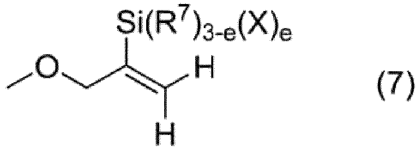 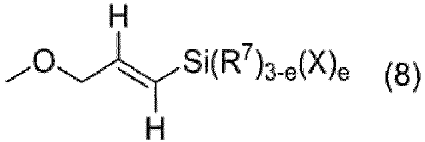 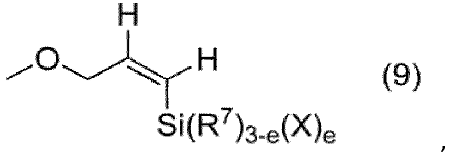 wobei R⁷, X und e wie für die Gruppen in den Formeln (4) bis (6) definiert sind.

3. Die nicht-zinnorganische härtbare Zusammensetzung gemäß Anspruch 1 oder 2, wobei ein Polymergerüst des organischen Polymers (A) mindestens eines, ausgewählt aus der Gruppe bestehend aus einem Polyoxyalkylenpolymer, einem gesättigten Kohlenwasserstoffpolymer und einem (Meth)acrylesterpolymer ist.

4. Die nicht-zinnorganische härtbare Zusammensetzung gemäß einem der Ansprüche 1 bis 3, wobei die Amidinverbindung (B) durch die nachstehende Formel (10) darstellt ist:
R¹¹N=CR¹²-NR¹³₂ (10),
wobei R¹¹, R¹² und zwei R¹³ jeweils unabhängig ein Wasserstoffatom oder eine organische Gruppe darstellen, und zwei oder mehr von R¹¹, R¹² und zwei R¹³ gegebenenfalls verbunden sind, um eine cyclische Struktur zu bilden.

5. Die nicht-zinnorganische härtbare Zusammensetzung gemäß einem der Ansprüche 1 bis 4, wobei der Gehalt der Amidinverbindung (B) 0,1 bis 15 Gewichtsteile beträgt und der Gehalt des Säureanhydrids und/oder der Carbonsäure (C) 0,1 bis 15 Gewichtsteile beträgt pro 100 Gewichtsteile des organischen Polymers (A).

6. Die nicht-zinnorganische härtbare Zusammensetzung gemäß einem der Ansprüche 1 bis 5, wobei die Komponente (C) ein Säureanhydrid umfasst.

7. Ein gehärtetes Produkt, erhalten durch Härten der nicht-zinnorganischen härtbaren Zusammensetzung gemäß einem der Ansprüche 1 bis 6.

8. Ein Verfahren zur Verhinderung des Austretens auf einer Oberfläche eines gehärteten Produkts, wobei das Verfahren das Mischen eines organischen Polymers (A), einer Amidinverbindung (B) und eines Säureanhydrids und/oder einer Carbonsäure (C) und das Härten des resultierenden Gemischs umfasst, um das gehärtete Produkt zu erhalten, wobei das organische Polymer (A) eine reaktive Siliziumgruppe enthaltende Struktur, dargestellt durch mindestens eine der Formeln (1) bis (6) wie in einem der Ansprüche 1 bis 6 definiert, aufweist, die Amidinverbindung (B) einen Schmelzpunkt von weniger als 23 °C aufweist, und die Carbonsäure (C) einen pKa von 3 bis 5 aufweist.

## Revendications

1. Composition durcissable sans organoétain comprenant :
(A) un polymère organique ayant une structure contenant un groupe siliconé réactif ;
(B) un composé amidine ayant un point de fusion inférieur à 23 °C ; et
(C) un anhydride d'acide et/ou un acide carboxylique ayant un pKa de 3 à 5,
dans laquelle
la structure contenant un groupe siliconé réactif du polymère organique (A) est représentée par au moins l'une des formules (1) à (6) suivantes : 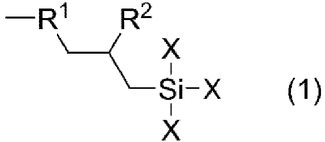
dans laquelle R¹ représente un groupe de liaison divalent contenant éventuellement un hétéroatome, R² représente un atome d'hydrogène ou un groupe hydrocarboné ayant 1 à 5 atomes de carbone, et X représente un groupe hydroxy ou un groupe hydrolysable ; 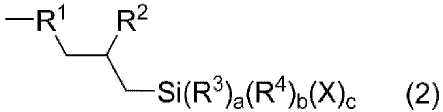
dans laquelle R¹, R² et X sont tels que définis ci-dessus, R³ représente un groupe hydrocarboné ayant 1 à 5 atomes de carbone et portant un groupe électroattracteur sur l'atome de carbone à la position 1, R⁴ représente un groupe hydrocarboné non substitué ayant 1 à 5 atomes de carbone, a vaut 1 ou 2, b vaut 0 ou 1, c vaut 1 ou 2, et la relation a + b +c = 3 est satisfaite ; 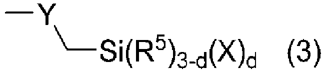
dans laquelle R⁵ représente un groupe hydrocarboné ayant 1 à 20 atomes de carbone et contenant éventuellement un hétéroatome, X est tel que défini ci-dessus, Y représente un groupe divalent choisi dans le groupe constitué par -O-, -S-, -N(R⁶)-, -O-C(=O)-N(R⁶)-, -N(R⁶)-C(=O)-O-, et -N(R⁶)-C(=O)-N(R⁶)-, R⁶ représente un atome d'hydrogène ou un groupe hydrocarboné ayant 1 à 20 atomes de carbone et contenant éventuellement un hétéroatome, et d vaut 1, 2 ou 3 ; et 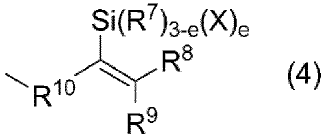 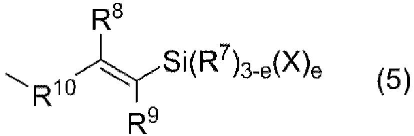 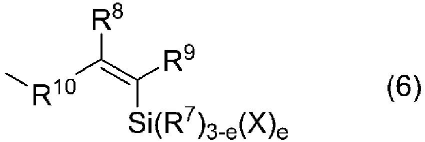
dans lesquelles R⁷ représente un groupe hydrocarboné ayant 1 à 20 atomes de carbone et contenant éventuellement un hétéroatome, X est tel que défini ci-dessus, e vaut 1, 2 ou 3, chacun de R⁸ et R⁹ représente indépendamment un atome d'hydrogène, un groupe alkyle ayant 1 à 20 atomes de carbone, un groupe aryle ayant 6 à 20 atomes de carbone, un groupe aralkyle ayant 7 à 20 atomes de carbone, ou un groupe silyle, R¹⁰ représente un groupe de liaison divalent, et chacune des deux liaisons partant de R¹⁰ est une liaison d'un atome de carbone, d'un atome d'oxygène, d'un atome d'azote, ou d'un atome de soufre contenu dans le groupe de liaison.

2. Composition durcissable sans organoétain selon la revendication 1, dans laquelle les formules (4) à (6) sont exprimées sous la forme des formules (7) à (9) suivantes respectivement : 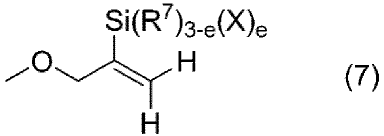 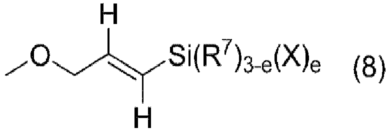 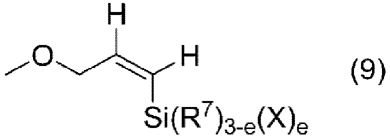 dans lesquelles R⁷, X et e sont tels que définis à propos des groupes dans les formules (4) à (6).

3. Composition durcissable sans organoétain selon la revendication 1 ou 2, dans laquelle un squelette polymérique du polymère organique (A) est au moins l'un choisi dans le groupe constitué par un polymère polyoxyalkylène, un polymère hydrocarboné saturé, et un polymère d'ester (méth)acrylique.

4. Composition durcissable sans organoétain selon l'une quelconque des revendications 1 à 3, dans laquelle le composé amidine (B) est représenté par la formule (10) suivante :
R¹¹N=CR¹²-NR¹³₂ (10)
dans laquelle chacun de R¹¹, R¹² et des deux R¹³ représente indépendamment un atome d'hydrogène ou un groupe organique, et deux ou plus parmi R¹¹, R¹² et les deux R¹³ sont éventuellement liés pour former une structure cyclique.

5. Composition durcissable sans organoétain selon l'une quelconque des revendications 1 à 4, dans laquelle la teneur en composé amidine (B) est de 0,1 à 15 parties en poids et la teneur en anhydride d'acide et/ou acide carboxylique (C) est de 0,1 à 15 parties en poids pour 100 parties en poids du polymère organique (A).

6. Composition durcissable sans organoétain selon l'une quelconque des revendications 1 à 5, dans laquelle le composant (C) comprend un anhydride d'acide.

7. Produit durci obtenu par durcissement de la composition durcissable sans organoétain selon l'une quelconque des revendications 1 à 6.

8. Méthode de prévention d'une exsudation sur une surface d'un produit durci, la méthode comprenant le mélange d'un polymère organique (A), d'un composé amidine (B), et d'un anhydride d'acide et/ou d'un acide carboxylique (C), et le durcissement du mélange résultant pour obtenir le produit durci, dans laquelle le polymère organique (A) a une structure contenant un groupe siliconé réactif représentée par au moins l'une des formules (1) à (6) comme défini dans l'une quelconque des revendications 1 à 6, le composé amidine (B) a un point de fusion inférieur à 23 °C, et l'acide carboxylique (C) a un pKa de 3 à 5.
